# EUROPÄISCHE PATENTSCHRIFT

(11) **EP 3 256 745 B1**
(45) Veröffentlichungstag und Bekanntmachung des Hinweises auf die Patenterteilung: **30.12.2020**
(21) Anmeldenummer: 16702922.2
(22) Anmeldetag: 03.02.2016
(51) Int. Cl.: F16B 13/00

(54) **DÜBELELEMENT, BEFESTIGUNGSVORRICHTUNG, VERFAHREN ZUR HERSTELLUNG EINES DÜBELELEMENTS UND VERFAHREN ZUR MONTAGE EINER BEFESTIGUNGSVORRICHTUNG**
DOWEL ELEMENT, FASTENING DEVICE, METHOD FOR PRODUCING A DOWEL ELEMENT, AND METHOD FOR INSTALLING A FASTENING DEVICE
ÉLÉMENT CHEVILLE, DISPOSITIF DE FIXATION, PROCÉDÉ DE FABRICATION D'UN ÉLÉMENT CHEVILLE ET PROCÉDÉ DE MONTAGE D'UN DISPOSITIF DE FIXATION

(30) Priorität: 12.02.2015 DE 102015202593
(43) Veröffentlichungstag der Anmeldung: 20.12.2017
(73) Patentinhaber: Lamello AG, 4416 Bubendorf (CH)
(72) Erfinder: SEILER, Philipp, 4424 Arboldswil (CH); JEKER, Patrick, 4225 Brislach (CH)
(74) Vertreter: Hoeger, Stellrecht & Partner Patentanwälte mbB
(86) Internationale Anmeldenummer: PCT/EP2016/052263
(87) Internationale Veröffentlichungsnummer: WO 2016/128271

(56) Entgegenhaltungen:
- DE-U1-202007 013 238
- US-A- 3 916 756
- US-A1- 2007 036 629

## Beschreibung

Die vorliegende Erfindung betrifft ein Dübelelement zur Befestigung eines Objekts an einem weiteren Objekt.

Ein Dübelelement kann beispielsweise ein Kunststoffbauteil sein, in welches eine Schraube einschraubbar ist, um zwei Objekte aneinander festzulegen.

Die DE 20 2007 013 238 U1 offenbart ein Dübelelement gemäß dem Oberbegriff von Anspruch 1.

Die US 3,916,756 A offenbart eine Kopplungsvorrichtung.

Die US 2007/0036629 A1 offenbart eine Schraube-Mutter-Struktur.

Der vorliegenden Erfindung liegt die Aufgabe zugrunde, ein Dübelelement bereitzustellen, welches einfach und kostengünstig herzustellen ist und eine einfache und zuverlässige Befestigung eines Objekts an einem weiteren Objekt ermöglicht.

Diese Aufgabe wird erfindungsgemäß durch ein Dübelelement zur Befestigung eines Objekts an einem weiteren Objekt gemäß Anspruch 1 gelöst.

Dadurch, dass das Dübelelement ein oder mehrere elastisch nachgiebige Federelemente umfasst, welche in einem montierten Zustand des Dübelelements in den Aufnahmeraum hineinragen, kann ein Befestigungselement einfach und zuverlässig mit dem Dübelelement verbunden werden, um letztlich zwei Objekte zuverlässig miteinander zu verbinden.

Unter einem montierten Zustand des Dübelelements ist vorzugsweise ein Zustand zu verstehen, in welchem ein Befestigungselement in dem Aufnahmeraum des Dübelelements angeordnet ist und/oder in den Aufnahmeraum des Dübelelements hineinragt, wobei das Befestigungselement in dem Aufnahmeraum mittels eines oder mehrerer Federelemente festgelegt ist, insbesondere verrastet oder verklemmend festgelegt ist.

Ein montierter Zustand des Dübelelements ist vorzugsweise zu unterscheiden von einem zur Montage vorbereiteten Zustand des Dübelelements. In diesem zur Montage vorbereiteten Zustand des Dübelelements kann vorgesehen sein, dass das Dübelelement in eine Öffnung oder Bohrung eines Objekts einschiebbar ist. Ein oder mehrere Federelemente des Dübelelements ragen dabei vorzugsweise in den Aufnahmeraum hinein und/oder sind zur Vorspannung der Federelemente in einer ausgelenkten Position gehalten.

Ein zur Montage vorbereiteter Zustand des Dübelelements ist insbesondere ein Zustand des Dübelelements, in welchem dieses zur Aufnahme eines Befestigungselements bereit oder vorbereitet ist.

Es kann vorgesehen sein, dass einzelne, mehrere oder alle mit Bezug auf den montierten Zustand des Dübelelements beschriebenen Merkmale sowohl im montierten Zustand als auch in einem zur Montage vorbereiteten Zustand verwirklicht sind. Es kann jedoch auch vorgesehen sein, dass einzelne, mehrere oder alle mit Bezug auf den montierten Zustand beschriebenen Merkmale ausschließlich im montierten Zustand und nicht in einem zur Montage vorbereiteten Zustand verwirklicht sind. Beispielsweise kann vorgesehen sein, dass ein oder mehrere Federelemente in einem zur Montage vorbereiteten Zustand des Dübelelements nicht in den Aufnahmeraum des Dübelelements hineinragen.

Vorteilhaft kann es sein, wenn der Grundkörper des Dübelelements zumindest näherungsweise hohlzylindrisch ausgebildet ist.

Der Grundkörper kann dabei beispielsweise einen im Wesentlichen kreisförmigen Querschnitt aufweisen. Ferner kann vorgesehen sein, dass der Grundkörper einen elliptischen oder länglichen oder auch rechteckigen Querschnitt aufweist.

Ein Querschnitt ist dabei insbesondere ein quer zu einer Verbindungsrichtung, in welcher ein Befestigungselement in den Aufnahmeraum des Grundkörpers einführbar ist, genommener Querschnitt.

Vorteilhaft kann es sein, wenn der Grundkörper global zumindest näherungsweise eine konstante Materialstärke aufweist.

Hierunter ist insbesondere zu verstehen, dass der Grundkörper überall zumindest näherungsweise dieselbe Materialstärke aufweist.

Der Grundkörper ist vorzugsweise aus einem metallischen Material und/oder aus einem Kunststoffmaterial gebildet oder umfasst ein metallisches Material und/oder ein Kunststoffmaterial.

Bei einer Ausgestaltung der Erfindung ist vorgesehen, dass der Grundkörper aus einem Metallblech gebildet ist.

Günstig kann es sein, wenn der Grundkörper ein oder mehrere elastisch nachgiebige Federelemente umfasst, welche durch einen oder mehrere Wandungsabschnitte des Grundkörpers gebildet sind, die in einem montierten Zustand des Dübelelements spiralförmig in den Aufnahmeraum hineinragen.

Unter einem spiralförmigen Hineinragen ist dabei insbesondere zu verstehen, dass ein oder mehrere Federelemente sich sowohl längs einer Umfangsrichtung des Dübelelements als auch radial nach innen in den Aufnahmeraum hineinerstrecken.

Ein oder mehrere Federelemente des Grundkörpers weisen vorzugsweise jeweils zwei seitliche Flanken auf.

Seitliche Flanken sind dabei insbesondere diejenigen Seitenkanten eines Federelements, welche sich von einer Hülse des Grundkörpers (Anfangsbereich) bis zu einem nach innen ragenden Ende des Federelements erstrecken.

Die seitlichen Flanken eines oder mehrerer Federelemente schließen mit einer Verbindungsrichtung des Dübelelements voneinander verschiedene Winkel ein.

Vorteilhaft kann es sein, wenn ein oder mehrere Federelemente in Richtung eines in den Aufnahmeraum hineinragenden Endes verjüngend ausgebildet sind.

Ein oder mehrere Federelemente bilden vorzugsweise Rastfedern zur Verrastung des Befestigungselements in dem Dübelelement.

Die Federelemente können eine reversible oder auch irreversible Festlegung des Befestigungselements an dem Dübelelement bewirken, beispielsweise abhängig von einer Ausgestaltung eines Befestigungsabschnitts eines Befestigungselements und/oder abhängig von einer einer Einbringöffnung abgewandten seitlichen Flanke eines oder mehrerer Federelemente.

Insbesondere kann hierdurch ein lösbarer oder unlösbarer Hinterschnitt zwischen dem einen oder den mehreren Federelementen und dem Befestigungsabschnitt des Befestigungselements vorgesehen sein.

Bei einer Ausgestaltung der Erfindung kann vorgesehen sein, dass der Grundkörper eine Einbringöffnung zum Einbringen des Befestigungselements in den Aufnahmeraum umfasst.

Ein oder mehrere Federelemente weisen jeweils zwei seitliche Flanken auf, wobei eine der Einbringöffnung zugewandte seitliche Flanke eines jeden Federelements mit einer Verbindungsrichtung einen kleineren Winkel einschließt als eine der Einbringöffnung abgewandte seitliche Flanke dieses Federelements.

Bei einer gekrümmten oder sonstwie nicht geraden Flanke ist zur Bestimmung des Winkels insbesondere ein mittlerer Winkel und/oder eine Gerade heranzuziehen, welche von einem Anfang der Flanke an der Hülse bis zu einem Ende der Flanke an einem nach innen ragenden Ende des Federelements verläuft.

Günstig kann es sein, wenn der Grundkörper des Dübelelements eine Hülse umfasst, welche eine Wandung des Dübelelements bildet.

Vorzugsweise ragen das eine oder die mehreren Federelemente des Grundkörpers in einen montierten Zustand des Dübelelements ausgehend von der Hülse in den Aufnahmeraum hinein.

Ein Wandungsabschnitt des Grundkörpers ist vorzugsweise in zumindest einem Zustand des Grundkörpers Bestandteil einer die Hülse bildenden Wandung oder zumindest derart geformt, dass der Wandungsabschnitt in eine die Hülse bildende Wandung hineinbewegt werden kann, insbesondere in eine im Wesentlichen komplementär zu dem Wandungsabschnitt ausgebildete Öffnung in der Hülse eingebracht werden kann.

Der Grundkörper des Dübelelements ist vorzugsweise einstückig ausgebildet.

Insbesondere kann vorgesehen sein, dass die Hülse, ein oder mehrere Federelemente und/oder ein oder mehrere Verankerungselemente des Dübelelements einstückig miteinander ausgebildet sind.

Insbesondere kann vorgesehen sein, dass der Grundkörper ein einstückiges Blechumformprodukt ist. Dabei sind insbesondere die Hülse, das eine oder die mehreren Federelemente und/oder das eine oder die mehreren Verankerungselemente des Dübelelements durch ein einstückiges Blechumformprodukt gebildet.

Vorteilhaft kann es sein, wenn das Dübelelement ein oder mehrere Verankerungselemente zur Verankerung des Dübelelements in einem Objekt umfasst.

Ein Verankerungselement ist insbesondere ein Vorsprung oder eine Rastnase, welche sich ausgehend von der Hülse von dem Aufnahmeraum weg nach außen erstreckt.

Vorzugsweise sind ein oder mehrere Verankerungselemente als ein umgeformter und/oder federnder Bereich der Hülse und/oder des Grundkörpers ausgebildet.

Es kann vorgesehen sein, dass ein oder mehrere Verankerungselemente die Hülse im Wesentlichen ringförmig umgeben.

Beispielsweise können ein oder mehrere Verankerungselemente durch Federlaschen gebildet sein.

Bei einer Ausgestaltung der Erfindung kann vorgesehen sein, dass das Dübelelement in einer einen Hinterschnitt aufweisenden Bohrung in einem Objekt festlegbar, insbesondere verrastbar, ist. Beispielsweise kann eine solche Bohrung mit einem T-Fräser durch Bohren und Zirkularfräsen hergestellt werden. Ein oder mehrere Verankerungselemente sind vorzugsweise mit der Bohrung in Eingriff bringbar, insbesondere derart, dass das eine oder die mehreren Verankerungselemente formschlüssig an dem Hinterschnitt angreifen.

Günstig kann es sein, wenn ein oder mehrere Verankerungselemente durch Wandungsabschnitte des Grundkörpers gebildet sind. Diese Wandungsabschnitte ragen vorzugsweise in einem montierten Zustand des Dübelelements ausgehend von der Hülse von dem Aufnahmeraum nach außen weg.

Günstig kann es sein, wenn ein oder mehrere Verankerungselemente in einem zur Montage des Dübelelements vorbereiteten Zustand ausgehend von der Hülse zumindest abschnittsweise in den Aufnahmeraum hineinragen.

Zur Verankerung des Dübelelements in einem Objekt sind das eine oder die mehreren Verankerungselemente vorzugsweise betätigbar, insbesondere durch elastische oder plastische Umformung derselben.

Beispielsweise kann vorgesehen sein, dass mittels des Befestigungselements oder eines separaten Werkzeugs ein oder mehrere Verankerungselemente aus dem Aufnahmeraum herausbewegbar und somit zur Verankerung des Dübelelements in ein Objekt hineinbewegbar sind.

Ein oder mehrere Verankerungselemente bilden vorzugsweise Widerhaken zur Verankerung des Dübelelements in einem Objekt.

Vorteilhaft kann es sein, wenn ein oder mehrere Verankerungselemente ein Außengewinde des Dübelelements bilden.

Ein solches Außengewinde kann insbesondere ein fragmentiertes Außengewinde sein, welches aus mehreren einzelnen und voneinander beabstandeten Verankerungselementen besteht, die jeweils nur einen Abschnitt eines Außengewindes bilden.

Vorteilhaft kann es sein, wenn das Dübelelement ein oder mehrere Arretierelemente zur Arretierung eines oder mehrerer Federelemente in einem vorgespannten Zustand umfasst.

Insbesondere sind mittels des einen oder der mehreren Arretierelemente das eine oder die mehreren Federelemente in einem zur Montage des Dübelelements und/oder in einem zur Aufnahme eines Befestigungselements bereiten Zustand des Dübelelements vorgespannt arretierbar.

Günstig kann es sein, wenn ein oder mehrere Federelemente mittels eines oder mehrerer Arretierelemente in einem zur Montage des Dübelelements in oder an einem Objekt bereiten Zustand vorgespannt oder vorspannbar sind.

Ein vorgespannter Zustand eines oder mehrerer Federelemente ist insbesondere ein Zustand, in welchem das eine oder die mehreren Federelemente aus einer entspannten Position, in welcher das eine oder die mehreren Federelemente in den Aufnahmeraum des Grundkörpers hineinragen, in eine gespannte Position gebracht sind. Die gespannte Position ist insbesondere eine Position, in welcher das eine oder die mehreren Federelemente in jeweils einer Öffnung oder Ausnehmung einer die Hülse bildenden Wandung des Grundkörpers angeordnet sind.

Günstig kann es sein, wenn ein oder mehrere Arretierelemente durch Wandungsabschnitte des Grundkörpers gebildet sind.

Das eine oder die mehreren Arretierelemente ragen vorzugsweise in den Aufnahmeraum hinein.

Günstig kann es sein, wenn ein oder mehrere Arretierelemente beim Einbringen eines Befestigungselements in den Aufnahmeraum betätigbar sind, insbesondere zum Freigeben eines oder mehrerer Federelemente.

Das eine oder die mehreren Arretierelemente werden dabei vorzugsweise umgeformt oder weggedrückt oder sonst wie bewegt, insbesondere um eines oder mehrere Federelemente aus dem vorgespannten Zustand freizugeben.

Bei einer Ausgestaltung der Erfindung kann vorgesehen sein, dass das Dübelelement zwei oder mehr in einer Verbindungsrichtung hintereinander angeordnete Federelemente umfasst. Auf diese Weise kann insbesondere ein schrittweises Festlegen eines Befestigungselements in dem Dübelelement und/oder ein Festlegen des Befestigungselements in unterschiedlichen Tiefen in dem Dübelelement realisiert werden.

Alternativ oder ergänzend hierzu kann vorgesehen sein, dass das Dübelelement zwei oder mehr bezüglich einer Verbindungsrichtung und/oder Umfangsrichtung nebeneinander angeordnete Federelemente umfasst.

Insbesondere sind die Enden zweier oder mehrerer Federelemente längs der Verbindungsrichtung zumindest näherungsweise auf gleicher Höhe angeordnet.

Vorteilhaft kann es sein, wenn der Grundkörper eine Einbringöffnung, durch welche ein Befestigungselement in den Aufnahmeraum einbringbar ist, und eine der Einbringöffnung gegenüberliegende Befestigungsöffnung umfasst. Der Grundkörper ist im Bereich der Befestigungsöffnung vorzugsweise verjüngend ausgebildet und/oder umfasst einen oder mehrere nach innen ragende Abschnitte.

Mittels der Befestigungsöffnung ist vorzugsweise ein Schraubelement zum Festschrauben des Dübelelements an oder in einem Objekt aufnehmbar. Insbesondere bildet die Befestigungsöffnung aufgrund des einen oder der mehreren nach innen ragenden Abschnitte und/oder aufgrund der verjüngenden Ausbildung einen Hinterschneidungsabschnitt, an welchem insbesondere ein Schraubenkopf eines Schraubelements angreifen kann. Vorteilhaft kann es sein, wenn das Dübelelement eine oder mehrere Flüssigkeitsaufnahmen zur Aufnahme einer Flüssigkeit, insbesondere zur Aufnahme von Klebstoff, umfasst.

Eine oder mehrere Flüssigkeitsaufnahmen sind vorzugsweise an einem oder mehreren Federelementen angeordnet.

Vorzugsweise sind eine oder mehrere Flüssigkeitsaufnahmen durch Beschädigung derselben betätigbar, so dass Flüssigkeit austreten kann.

Die eine oder die mehreren Flüssigkeitsaufnahmen sind vorzugsweise durch Bewegung eines oder mehrerer Federelemente betätigbar.

Durch die Betätigung einer oder mehrerer Flüssigkeitsaufnahmen ist vorzugsweise die Flüssigkeit, beispielsweise Klebstoff, im Bereich des Dübelelements freisetzbar, insbesondere um das Dübelelement in oder an dem Objekt festzulegen und/oder um das Befestigungselement in dem Dübelelement festzulegen.

Günstig kann es sein, wenn das Dübelelement ein ringförmig geschlossenes Element ist, insbesondere bezogen auf eine Umfangsrichtung, welche im Wesentlichen senkrecht zu einer Verbindungsrichtung verläuft.

Alternativ hierzu kann vorgesehen sein, dass das Dübelelement eine im Wesentlichen parallel oder schräg zur Verbindungsrichtung verlaufende Dehnungsfuge aufweist.

Eine Hülse des Dübelelements ist dabei vorzugsweise in Umfangsrichtung elastisch nachgiebig ausgebildet.

Insbesondere kann das Dübelelement hierdurch klemmend in eine Öffnung in einem Objekt eingesetzt werden, um eine Montage des Dübelelements zu vereinfachen.

Das vorstehend beschriebene Dübelelement eignet sich insbesondere zur Verwendung in einer Befestigungsvorrichtung.

Die vorliegende Erfindung betrifft daher auch eine Befestigungsvorrichtung zur Befestigung eines Objekts an einem weiteren Objekt.

Eine solche erfindungsgemäße Befestigungsvorrichtung umfasst vorzugsweise ein oder mehrere Dübelelemente, insbesondere erfindungsgemäße Dübelelemente, und ein oder mehrere Befestigungselemente zum Einbringen und Festlegen derselben in dem einen oder den mehreren Dübelelementen.

Die erfindungsgemäße Befestigungsvorrichtung weist vorzugsweise einzelne oder mehrere der im Zusammenhang mit dem erfindungsgemäßen Dübelelement beschriebenen Merkmale und/oder Vorteile auf.

Günstig kann es sein, wenn ein oder mehrere Befestigungselemente jeweils einen oder mehrere Befestigungsabschnitte umfassen, mittels welchen das eine oder die mehreren Befestigungselemente in einem oder mehreren Aufnahmeräumen eines oder mehrerer Dübelelemente festlegbar sind.

Insbesondere sind der eine oder die mehreren Befestigungsabschnitte mit einem oder mehreren Federelementen eines oder mehrerer Dübelelemente in Eingriff bringbar.

Ein Befestigungsabschnitt eines Befestigungselements kann beispielsweise ein Kopf eines Schraubelements sein.

Insbesondere kann vorgesehen sein, dass ein Befestigungsabschnitt ein im Wesentlichen pilzförmiges Ende eines Befestigungselements ist.

Günstig kann es sein, wenn ein oder mehrere Befestigungselemente jeweils einen oder mehrere Verankerungsabschnitte umfassen, mittels welchen das eine oder die mehreren Befestigungselemente an oder in einem oder mehreren Objekten festlegbar sind.

Ein Verankerungsabschnitt ist insbesondere ein Schraubabschnitt oder ein Rastabschnitt zum Einschrauben oder Verrasten des Befestigungselements an oder in einem Objekt.

Ferner kann vorgesehen sein, dass ein oder mehrere Verankerungsabschnitte durch ein Verbindungselement gebildet sind, welches einen oder mehrere nicht-selbstschneidende kreisabschnittförmige Vorsprünge umfasst, die in eine im Wesentlichen komplementär hierzu ausgebildete Nut in einem Objekt einbringbar sind.

Alternativ oder ergänzend hierzu kann vorgesehen sein, dass ein oder mehrere Verankerungselemente eines Dübelelements durch ein solches Verbindungselement gebildet sind.

Ein Verbindungselement, welches einen oder mehrere nicht-selbstschneidende kreisabschnittförmige Vorsprünge umfasst, weist insbesondere einen oder mehrere gekrümmte Abstützflächen auf, die in einem Längsschnitt kreisbogenförmig sind.

Bei einer Ausgestaltung der Erfindung kann vorgesehen sein, dass ein oder mehrere Befestigungselemente jeweils einen oder mehrere Anschlagabschnitte umfassen, mittels welchen das eine oder die mehreren Befestigungselemente in einer vorgegebenen Position an oder in einem oder mehreren Objekten positionierbar sind.

Ein Anschlagabschnitt ist beispielsweise ein im Wesentlichen ringförmiger Vorsprung, welcher insbesondere an einen Verankerungsabschnitt eines Befestigungselements angrenzt.

Insbesondere kann bei einem als Schraubabschnitt ausgebildeten Verankerungsabschnitt mittels eines Anschlagabschnitts gewährleistet werden, dass das Befestigungselement nicht zu weit in ein Objekt eingeschraubt wird.

Günstig kann es sein, wenn ein oder mehrere Befestigungselemente jeweils einen oder mehrere Befestigungsabschnitte, jeweils einen oder mehrere Verankerungsabschnitte und jeweils einen oder mehrere Verbindungsabschnitte umfassen, wobei jeweils ein Verbindungsabschnitt zwischen einem Verankerungsabschnitt und einem Befestigungsabschnitt eines Befestigungselements angeordnet ist.

Der Verbindungsabschnitt weist vorzugsweise bezüglich einer Längsmittelachse des Befestigungselements in radialer Richtung eine geringere Ausdehnung auf als ein benachbarter Verankerungsabschnitt und/oder als ein benachbarter Befestigungsabschnitt.

Ein Befestigungselement ist vorzugsweise im Wesentlichen rotationssymmetrisch ausgebildet.

Günstig kann es sein, wenn ein Befestigungselement einen konturierten, insbesondere geriffelten, Verbindungsabschnitt aufweist.

Der Verbindungsabschnitt kann beispielsweise längs der Verbindungsrichtung konturiert oder geriffelt sein.

Vorzugsweise dient ein konturierter Verbindungsabschnitt dazu, den Verbindungsabschnitt mit einem oder mehreren Enden eines oder mehrerer Federelemente in Eingriff zu bringen. Beispielsweise kann hierdurch eine Drehmitnahme zwischen dem Befestigungselement und dem Dübelelement realisiert werden, um beispielsweise das Dübelelement zusammen mit dem Befestigungselement aus einem Objekt herausschrauben zu können.

Es kann jedoch auch vorgesehen sein, dass mittels eines konturierten Verbindungsabschnitts eine Rotationssicherung zur Vermeidung einer Rotation des Befestigungselements relativ zu dem Dübelelement realisiert ist.

Ein oder mehrere Befestigungselemente weisen vorzugsweise zumindest abschnittsweise einen zumindest näherungsweise T-förmigen Längsschnitt auf.

Ein Längsschnitt ist insbesondere ein längs der Längsmittelachse genommener Längsschnitt.

Günstig kann es sein, wenn ein einem Verankerungsabschnitt eines Befestigungselements abgewandtes Ende eines Befestigungsabschnitts des Befestigungselements von dem Verankerungsabschnitt weg gerichtet verjüngend ausgebildet ist. Auf diese Weise ist das Befestigungselement einfach in den Aufnahmeraum des Dübelelements einführbar, insbesondere an einem oder mehreren Federelementen vorbeiführbar.

Es kann jedoch auch vorgesehen sein, dass ein einem Verankerungsabschnitt eines Befestigungselements abgewandtes Ende eines Befestigungsabschnitts des Befestigungselements senkrecht zur Verbindungsrichtung verlaufend ausgebildet ist.

Ein einem Verankerungsabschnitt eines Befestigungselements zugewandtes Ende eines Befestigungsabschnitts des Befestigungselements ist vorzugsweise zu dem Verankerungsabschnitt hin verjüngend ausgebildet. Auf diese Weise kann vorzugsweise eine lösbare Festlegung des Befestigungselements an dem Dübelelement realisiert werden.

Ferner kann vorgesehen sein, dass ein einem Verankerungsabschnitt eines Befestigungselements zugewandtes Ende eines Befestigungsabschnitts des Befestigungselements senkrecht zur Verbindungsrichtung verlaufend ausgebildet ist. Auf diese Weise kann, insbesondere abhängig von der Ausgestaltung der seitlichen Flanken eines oder mehrerer Federelemente, eine unlösbare Festlegung des Befestigungselements an dem Dübelelement realisiert werden.

Bei einer Ausgestaltung der Erfindung kann vorgesehen sein, dass ein einem Verankerungsabschnitt eines Befestigungselements abgewandtes Ende eines Befestigungsabschnitts des Befestigungselements mit einer Werkzeugaufnahme versehen ist.

Eine solche Werkzeugaufnahme kann beispielsweise eine Öffnung, Ausnehmung oder ein sonst wie geformter Abschnitt sein, welcher ein Angreifen eines Werkzeugs ermöglicht. Beispielsweise kann eine Werkzeugaufnahme eine Schlitzaufnahme, eine Kreuzschlitzaufnahme oder eine Innensechskant-aufnahme sein, um mit einem entsprechend ausgebildeten Schraubendreher angreifen zu können.

Mittels der Werkzeugaufnahme kann das Befestigungselement vorzugsweise betätigt werden, insbesondere zur Verankerung des Befestigungselements in oder an einem Objekt. Beispielsweise kann vorgesehen sein, dass der Verankerungsabschnitt als ein Schraubabschnitt ausgebildet ist und dass das Befestigungselement mittels eines Schraubendrehers, der an der Werkzeugaufnahme angreift, in ein Objekt einschraubbar ist.

Vorzugsweise ist vorgesehen, dass ein Ende eines Befestigungselements in oder an einem Objekt verankert oder verankerbar ist, während das weitere Ende des Befestigungselements in dem Dübelelement festgelegt oder festlegbar ist.

Dabei kann vorgesehen sein, dass nur ein Ende eines Befestigungselements mit einem Dübelelement an einem Objekt verankert ist, während das weitere Ende unmittelbar, insbesondere mittels des Verankerungsabschnitts des Befestigungselements, an dem weiteren Objekt festgelegt, beispielsweise festgeschraubt, ist.

Alternativ hierzu kann vorgesehen sein, dass zwei einander gegenüberliegende Enden eines Befestigungselements mittels jeweils eines Dübelelements an jeweils einem Objekt festlegbar, insbesondere verankerbar, sind.

Die vorliegende Erfindung betrifft ferner ein Verfahren zur Herstellung eines Dübelelements, insbesondere eines erfindungsgemäßen Dübelelements.

Der Erfindung liegt diesbezüglich die Aufgabe zugrunde, ein Verfahren bereitzustellen, mittels welchem ein Dübelelement einfach und kostengünstig herstellbar ist.

Diese Aufgabe wird erfindungsgemäß durch ein Verfahren gemäß Anspruch 13 gelöst.

Das erfindungsgemäße Verfahren zur Herstellung eines Dübelelements weist vorzugsweise einzelne oder mehrere der im Zusammenhang mit dem erfindungsgemäßen Dübelelement und/oder der erfindungsgemäßen Befestigungsvorrichtung beschriebenen Merkmale und/oder Vorteile auf.

Günstig kann es sein, wenn das Blechmaterial als Flachbandmaterial bereitgestellt und/oder zugeschnitten wird.

Die Schnitte und/oder Öffnungen werden vorzugsweise in einem Laserschneidverfahren und/oder in einem Stanzverfahren in das Blechmaterial eingebracht.

Günstig kann es sein, wenn zur Ausformung eines oder mehrerer Verankerungselemente Schnitte und/oder Öffnungen in das Blechmaterial eingebracht werden.

Das Blechmaterial wird vorzugsweise im Wesentlichen ringförmig gebogen, um die Wandung der Hülse des Dübelelements herzustellen.

Ferner kann vorgesehen sein, dass ein oder mehrere Federelemente mit einer stärkeren Krümmung als der die Hülse bildende Teil des Blechmaterials gebogen werden, so dass das eine oder die mehreren Federelemente in den Aufnahmeraum des Dübelelements hineinragen.

Die vorliegende Erfindung betrifft ferner ein Verfahren zur Montage einer Befestigungsvorrichtung.

Der Erfindung liegt diesbezüglich die Aufgabe zugrunde, ein Verfahren bereitzustellen, mittels welchem zwei Objekte zuverlässig aneinander festlegbar sind.

Diese Aufgabe wird erfindungsgemäß durch ein Verfahren gemäß Anspruch 15 gelöst.

Das erfindungsgemäße Verfahren zur Montage einer Befestigungsvorrichtung umfasst vorzugsweise einzelne oder mehrere der Merkmale und/oder Vorteile, welche im Zusammenhang mit dem erfindungsgemäßen Dübelelement, der erfindungsgemäßen Befestigungsvorrichtung und/oder dem erfindungsgemäßen Verfahren zur Herstellung eines Dübelelements beschrieben sind.

Ferner können das erfindungsgemäße Dübelelement, die erfindungsgemäße Befestigungsvorrichtung und/oder die erfindungsgemäßen Verfahren einzelne oder mehrere der nachfolgend beschriebenen Merkmale und/oder Vorteile aufweisen:
Die Erfindung eignet sich insbesondere zur Verwendung im Möbelbau, im Holzbau, im Fassadenbau, im Fahrzeugbau, im Maschinenbau oder in der Elektrotechnik.

Grundsätzlich eignet sich die Erfindung zur Verbindung von Bauteilen und Objekten jedweder Art.

Die Hülse des Dübelelements kann beispielsweise kreiszylinderförmig oder auch konisch ausgebildet sein. Ein Öffnungswinkel beträgt dabei vorzugsweise höchstens ungefähr 10°, beispielsweise höchstens ungefähr 5°.

Vorteilhaft kann es sein, wenn das Dübelelement nach der Formgebung desselben, insbesondere nach der Formgebung eines oder mehrerer Federelemente, thermisch behandelt wird.

Als Material für das Dübelelement kann insbesondere Bandstahl oder Federstahl vorgesehen sein.

Ferner kann vorgesehen sein, dass das Dübelelement und/oder das Befestigungselement als ein Spritzgussbauteil, insbesondere als ein Kunststoff-Spritzgussbauteil, ausgebildet ist.

Zur Betätigung eines oder mehrerer Verankerungselemente des Dübelelements kann beispielsweise ein Werkzeug ähnlich einer Crimpzange vorgesehen sein, insbesondere um die Verankerungselemente aus dem Aufnahmeraum des Dübelelements herauszubiegen und mit dem Objekt in Eingriff zu bringen.

Die Verankerungselemente werden vorzugsweise plastisch verformt, um eine zuverlässige Festlegung des Dübelelements zu gewährleisten.

Vorzugsweise werden die Federelemente beim Einbringen des Befestigungselements in den Aufnahmeraum elastisch verformt.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Dübelelements einer Befestigungsvorrichtung, wobei das Dübelelement zwei Federelemente und sechs Verankerungselemente umfasst, welche an einer Hülse des Dübelelements angeordnet sind;
- Fig. 2: eine weitere schematische perspektivische Darstellung des Dübelelements aus Fig. 1;
- Fig. 3: eine schematische Seitenansicht des Dübelelements aus Fig. 3 mit einem in gestrichelten Linien angedeuteten Objekt, in welchem das Dübelelement angeordnet ist;
- Fig. 4: eine weitere schematische Seitenansicht des Dübelelements aus Fig. 1;
- Fig. 5: eine schematische Draufsicht auf eine mit einer Einbringöffnung versehene Seite des Dübelelements aus Fig. 1, mit Blickrichtung in Richtung des Pfeiles 5 in Fig. 1;
- Fig. 6: eine schematische Draufsicht auf eine mit einer Befestigungsöffnung versehenen Seite des Dübelelements aus Fig. 1, mit Blickrichtung in Richtung des Pfeiles 6 in Fig. 2;
- Fig. 7: eine schematische Darstellung eines gestanzten oder geprägten Metallblechs zur Herstellung des Dübelelements aus Fig. 1;
- Fig. 8: eine schematische perspektivische Darstellung eines Befestigungselements der Befestigungsvorrichtung, wobei das Befestigungselement einen Befestigungsabschnitt zur Festlegung in einem Dübelelement, einen Verankerungsabschnitt zum Verankern des Befestigungselements in einem Objekt und einen Anschlagabschnitt zur gezielten Positionierung des Befestigungselements relativ zu dem Objekt umfasst;
- Fig. 9: eine weitere schematische perspektivische Darstellung des Befestigungselements aus Fig. 8;
- Fig. 10: eine schematische Draufsicht auf ein mit einer Werkzeugaufnahme versehenes Ende des Befestigungselements aus Fig. 8;
- Fig. 11: eine schematische Seitenansicht des Befestigungselements aus Fig. 8;
- Fig. 12: eine schematische Schnittdarstellung des Dübelelements aus Fig. 1 und des Befestigungselements aus Fig. 8 im unmontierten Zustand;
- Fig. 13: eine der Fig. 12 entsprechende schematische Darstellung des Dübelelements aus Fig. 1 und des Befestigungselements aus Fig. 8 im montierten Zustand;
- Fig. 14: eine der Fig. 8 entsprechende schematische Darstellung einer zweiten Ausführungsform eines Befestigungselements, bei welcher kein Anschlagabschnitt vorgesehen ist;
- Fig. 15: eine der Fig. 9 entsprechende schematische Darstellung des Befestigungselements aus Fig. 14;
- Fig. 16: eine der Fig. 10 entsprechende schematische Darstellung des Befestigungselements aus Fig. 14;
- Fig. 17: eine der Fig. 11 entsprechende schematische Darstellung des Befestigungselements aus Fig. 14;
- Fig. 18: eine alternative Ausgestaltung eines Befestigungsabschnitts eines Befestigungselements, welcher einen im Wesentlichen dreieckförmigen Längsschnitt aufweist;
- Fig. 19: eine alternative Ausgestaltung eines Befestigungsabschnitts eines Befestigungselements, welcher im Wesentlichen kugelförmig ausgebildet ist;
- Fig. 20: eine weitere alternative Ausführungsform eines Befestigungsabschnitts eines Befestigungselements, wobei ein im Wesentlichen kugelabschnittsförmiger Abschnitt auf einen im Wesentlichen hohlzylindrischen Abschnitt folgt, welcher wiederum auf einen im Wesentlichen konischen Abschnitt folgt;
- Fig. 21: eine weitere alternative Ausgestaltung eines Befestigungsabschnitts eines Befestigungselements, wobei ein im Wesentlichen zylindrischer Abschnitt zwischen zwei konischen Abschnitten angeordnet ist;
- Fig. 22: eine alternative Ausführungsform eines Befestigungsabschnitts eines Befestigungselements, wobei ein konischer Abschnitt und ein zylindrischer Abschnitt vorgesehen sind;
- Fig. 23: eine alternative Ausgestaltung eines Federelements eines Dübelelements, wobei eine längere gerade seitliche Flanke und eine kürzere gekrümmte seitliche Flanke vorgesehen sind;
- Fig. 24: eine alternative Ausgestaltung eines Federelements eines Dübelelements, wobei zwei gleich lange gerade seitliche Flanken vorgesehen sind;
- Fig. 25: eine weitere alternative Ausgestaltung eines Federelements eines Dübelelements, wobei eine gerade lange seitliche Flanke und eine gerade kurze seitliche Flanke vorgesehen sind;
- Fig. 26: eine weitere alternative Ausgestaltung eines Federelements eines Dübelelements, wobei eine lange gerade seitliche Flanke und eine wellenförmige kurze seitliche Flanke vorgesehen sind;
- Fig. 27: eine schematische Seitenansicht einer Befestigungsvorrichtung, bei welcher zwei Dübelelemente und ein mit zwei Befestigungsabschnitten versehenes Befestigungselement vorgesehen sind;
- Fig. 28: eine alternative Ausgestaltung eines Dübelelements, wobei ein oder mehrere Arretierelemente zum Arretieren eines oder mehrerer Federelemente in einer vorgespannten Stellung vorgesehen sind;
- Fig. 29: einen schematischen Längsschnitt durch das Dübelelement aus Fig. 28;
- Fig. 30: eine vergrößerte Darstellung des Bereichs XXX in Fig. 29;
- Fig. 31: eine alternative Ausgestaltung einer Befestigungsvorrichtung, bei welcher ein zwischen zwei Federelementen eingespanntes Arretierelement zum Arretieren der Federelemente in einer vorspannten Stellung vorgesehen ist;
- Fig. 32: eine alternative Ausgestaltung eines Dübelelements, bei welchem drei Federelemente vorgesehen sind;
- Fig. 33: eine weitere alternative Ausgestaltung eines Dübelelements, welches mindestens zwei bezüglich einer Verbindungsrichtung hintereinander angeordnete Federelemente umfasst;
- Fig. 34: eine schematische Seitenansicht einer alternativen Ausführungsform eines Befestigungselements, welches mehrere in einer Verbindungsrichtung hintereinander angeordnete Befestigungsabschnitte umfasst;
- Fig. 35: eine schematische Draufsicht auf eine alternative Ausgestaltung eines Dübelelements, welches einen länglichen Querschnitt aufweist und mit sechs Federelementen versehen ist;
- Fig. 36: eine schematische Seitenansicht des Dübelelements aus Fig. 35;
- Fig. 37: eine schematische perspektivische Darstellung eines Befestigungselements zur Festlegung in dem Dübelelement gemäß Fig. 35;
- Fig. 38: eine schematische Draufsicht auf eine Schmalseite des Befestigungselements aus Fig. 37;
- Fig. 39: eine schematische perspektivische Darstellung einer alternativen Ausführungsform eines Dübelelements, welches mehrere Verankerungselemente umfasst, die durch kragenartiges Umbiegen eines Abschnitts des Dübelelements nach außen gebildet sind, so dass ein im Wesentlichen ringförmiger Verankerungsbereich gebildet ist;
- Fig. 40: einen schematischen Längsschnitt durch das Dübelelement aus Fig. 39;
- Fig. 41: eine in einem Objekt angeordnete Nut zur Aufnahme des Dübelelements aus Fig. 39;
- Fig. 42: eine alternative Ausgestaltung eines Befestigungselements, welches einen Verankerungsabschnitt umfasst, der einen oder mehrere kreisbogenabschnittförmige Hinterschneidungsabschnitte umfasst und in eine komplementär hierzu ausgebildete Nut in einem Objekt einbringbar ist;
- Fig. 43: eine alternative Ausgestaltung eines Dübelelements, welches einen oder mehrere kreisbogenabschnittförmige Hinterschneidungsabschnitte umfasst und in eine komplementär hierzu ausgebildete Nut in einem Objekt einbringbar ist;
- Fig. 44: eine schematische Draufsicht auf das Dübelelement aus Fig. 43;
- Fig. 45: eine schematische Darstellung einer alternativen Ausgestaltung eines Dübelelements, welches im Bereich einer Befestigungsöffnung des Dübelelements mittels einer Schraube an einem Objekt festlegbar ist;
- Fig. 46: einen schematischen Längsschnitt durch eine alternative Ausgestaltung eines Dübelelements, bei welchem eine Flüssigkeitsaufnahme zur Aufnahme von beispielsweise Klebstoff vorgesehen ist;
- Fig. 47: eine schematische Seitenansicht einer alternativen Ausgestaltung eines Befestigungselements, welches eine in einem Verbindungsabschnitt angeordnete Randrierung aufweist und hierdurch drehfest und/oder rastend mit einem oder mehreren Federelementen eines Dübelelements in Eingriff bringbar ist;
- Fig. 48: einen schematischen Schnitt durch ein Dübelelement und das Befestigungselement aus Fig. 47 zur Illustration der Wechselwirkung zwischen den Federelementen und dem Verbindungsabschnitt des Befestigungselements aus Fig. 47;
- Fig. 49: eine alternative Ausgestaltung eines Dübelelements, wobei mehrere Verankerungselemente vorgesehen sind, die in einem zur Montage des Dübelelements vorbereiteten Zustand zumindest abschnittsweise in den Innenraum (Aufnahmeraum) des Dübelelements hineinragen und zur Verankerung des Dübelelements plastisch umformbar sind;
- Fig. 50: eine der Fig. 49 entsprechende Darstellung des Dübelelements, wobei die Verankerungselemente mittels eines Befestigungselements betätigt und in eine Verankerungsposition gebracht wurden; und
- Fig. 51: eine der Fig. 7 entsprechende schematische Darstellung einer alternativen Ausführungsform eines Metallblechs, mittels welchem ein Dübelelement herstellbar ist, das ein durch Verankerungselemente gebildetes fragmentiertes Außengewinde aufweist.

Gleiche oder funktional äquivalente Elemente sind in sämtlichen Figuren mit denselben Bezugszeichen versehen.

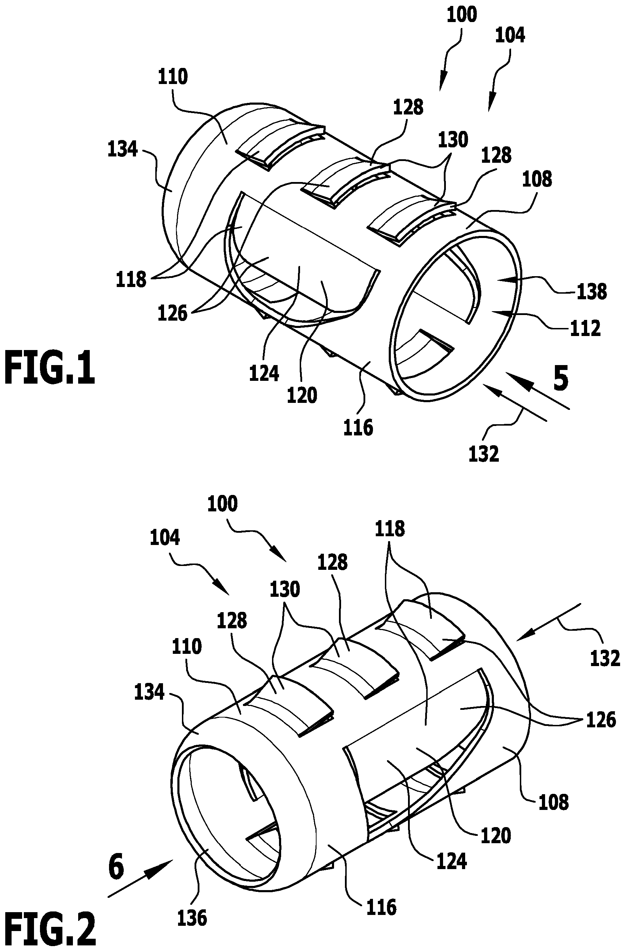

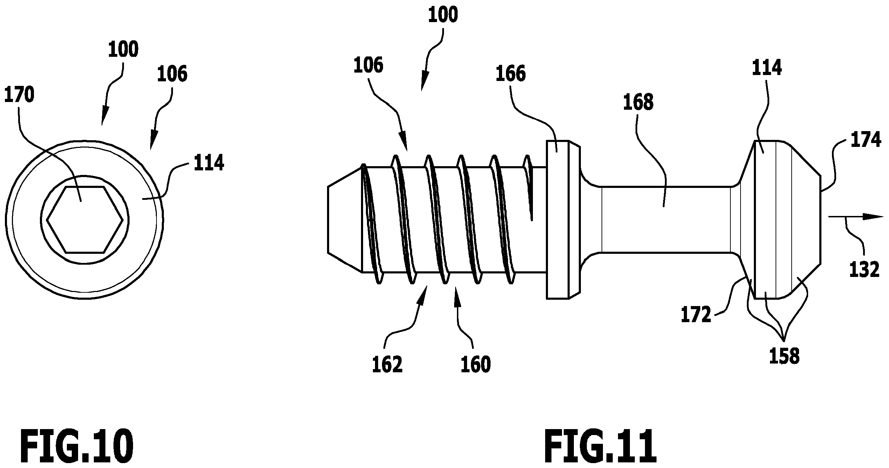

Eine in den Fig. 1 bis 13 dargestellte erste Ausführungsform einer als Ganzes mit 100 bezeichneten Befestigungsvorrichtung dient beispielsweise der Verbindung zweier Objekte 102 miteinander.

Eine solche Befestigungsvorrichtung 100 kann beispielsweise im Möbelbau zum Einsatz kommen, um zwei Wandelemente oder sonstige Bauteile eines Möbelstücks miteinander zu verbinden.

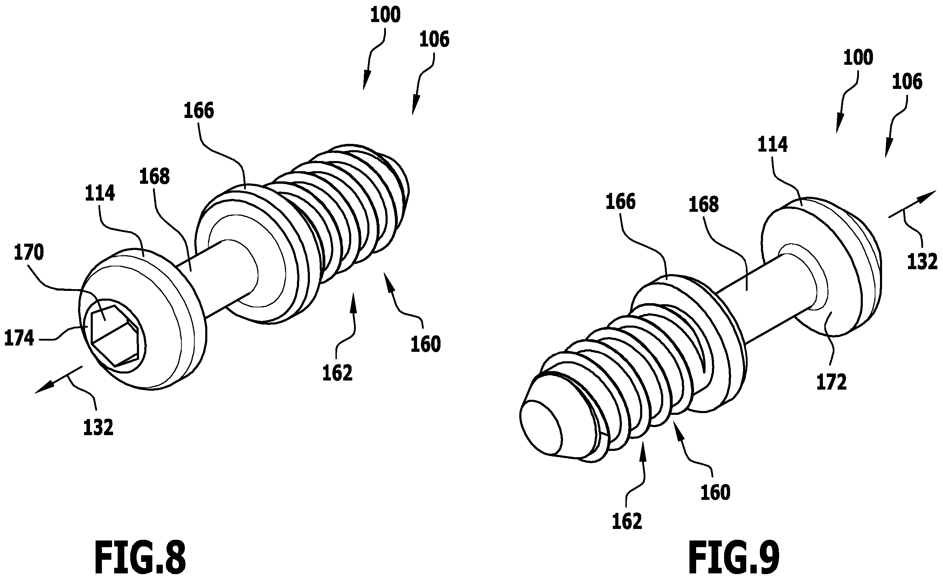

Die Befestigungsvorrichtung 100 umfasst ein Dübelelement 104 (siehe die Fig. 1 bis 7) und ein Befestigungselement 106 (siehe die Fig. 8 bis 11).

Das Dübelelement 104 umfasst einen Grundkörper 108, welcher eine im Wesentlichen hohlzylindrische Hülse 110 umfasst.

Der Grundkörper 108, insbesondere die Hülse 110, umgibt einen Aufnahmeraum 112, des Dübelelements 104.

Der Aufnahmeraum 112 dient insbesondere der Aufnahme eines Befestigungsabschnitts 114 eines Befestigungselements 106.

Der Grundkörper 108 umfasst eine Wandung 116, welche insbesondere die Hülse 110 bildet.

Die Wandung 116 des Grundkörpers 108 ist teilweise unterbrochen ausgebildet.

Insbesondere sind Wandungsabschnitte 118 vorgesehen, welche aus der die Hülse 110 bildenden Wandung 116 herausragen.

Dabei sind insbesondere ein oder mehrere Wandungsabschnitte 118 vorgesehen, welche in den Aufnahmeraum 112 hineinragen. Diese Wandungsabschnitte 118 sind insbesondere Federelemente 120 des Dübelelements 104.

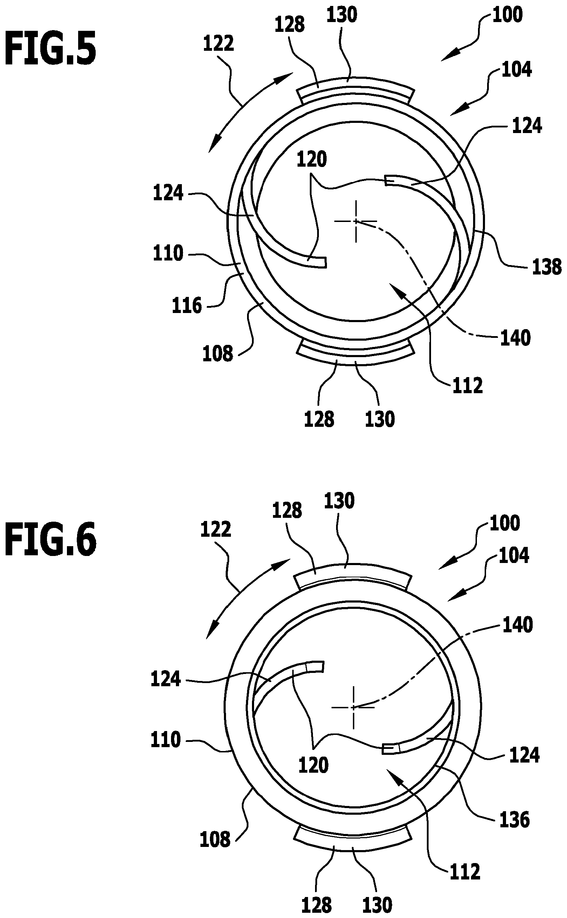

Wie insbesondere den Fig. 5 und 6 zu entnehmen ist, ragen diese Federelemente 120 im Wesentlichen spiralförmig in den Aufnahmeraum 112 des Dübelelements 104 hinein.

Die Federelemente 120 erstrecken sich dabei ausgehend von der Hülse 110 nach innen in den Aufnahmeraum 112 und zugleich längs einer Umfangsrichtung 122 des Dübelelements 104.

Die Federelemente 120 dienen insbesondere der Verrastung eines Befestigungselements 106 in dem Aufnahmeraum 112 des Dübelelements 104. Die Federelemente 120 sind daher insbesondere Rastfedern 124.

Die Federelemente 120 sind insbesondere als Laschen 126 ausgebildet, welche sich von der Hülse 110 in den Aufnahmeraum 112 hineinerstrecken.

Die Federelemente 120 sind vorzugsweise elastisch ausgebildet, so dass diese aus der in den Fig. 1 bis 6 dargestellten entspannten Stellung (Ruhestellung) reversibel elastisch in Richtung der Hülse 110 nach außen bewegt werden können. Aufgrund der Elastizität wird hierdurch eine Spannung auf die Federelemente 120 aufgebracht, so dass die Federelemente 120 von sich aus zurück in die in den Fig. 1 bis 6 dargestellte Ruheposition gelangen können.

Das Dübelelement 104 umfasst zudem ein oder mehrere Verankerungselemente 128, welche vorzugsweise ebenfalls durch Wandungsabschnitte 118 des Grundkörpers 108 gebildet sind, dabei jedoch von dem Aufnahmeraum 112 weg nach außen hervorstehen.

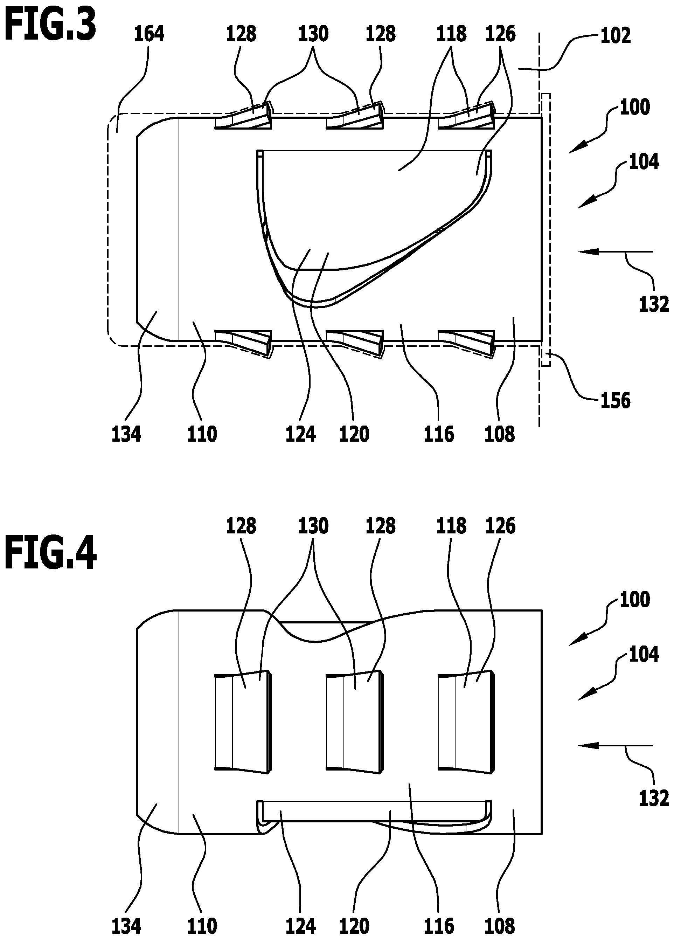

Die Verankerungselemente 128 sind insbesondere Widerhaken 130 zur Festlegung des Dübelelements 104 in einem Objekt 102 (siehe Fig. 3).

Zur einfachen Montage des Dübelelements 104 kann zudem vorgesehen sein, dass ein bezüglich einer Verbindungsrichtung 132 der Befestigungsvorrichtung 100 vorne liegendes Ende des Dübelelements 104 mit einer Einführschräge 134 versehen ist.

Die Einführschräge 134 umgibt dabei vorzugsweise eine Befestigungsöffnung 136 zur Festlegung des Dübelelements 104 an einem Objekt 102.

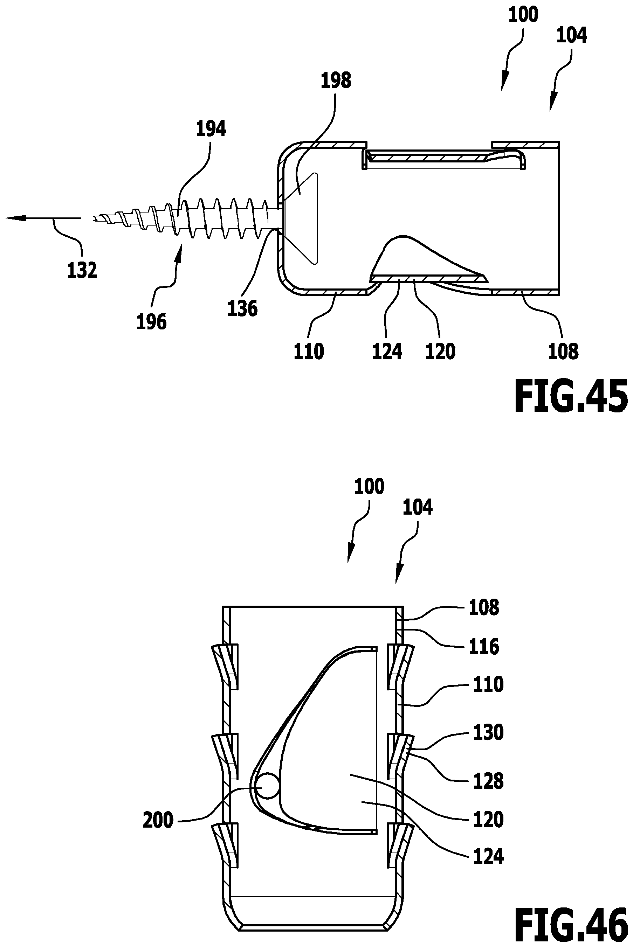

Die Funktionsweise der Befestigungsöffnung 136 wird mit Hinblick auf die Fig. 45 separat erläutert.

Das Dübelelement 104 ist vorzugsweise mit einer Einbringöffnung 138 versehen.

Die Einbringöffnung 138 ermöglicht das Einführen eines Befestigungselements 106 in den Aufnahmeraum 112 des Dübelelements 104.

Die Einbringöffnung 138 und die Befestigungsöffnung 136 sind vorzugsweise an einander gegenüberliegenden Enden des Dübelelements 104 angeordnet.

Das Dübelelement 104 kann insbesondere bezüglich einer Längsmittelachse 140 des Dübelelements 104 im Wesentlichen rotationssymmetrisch ausgebildet sein.

Das Dübelelement 104 weist dann insbesondere eine hohlzylindrische Hülse 110 mit kreisförmigem Querschnitt auf.

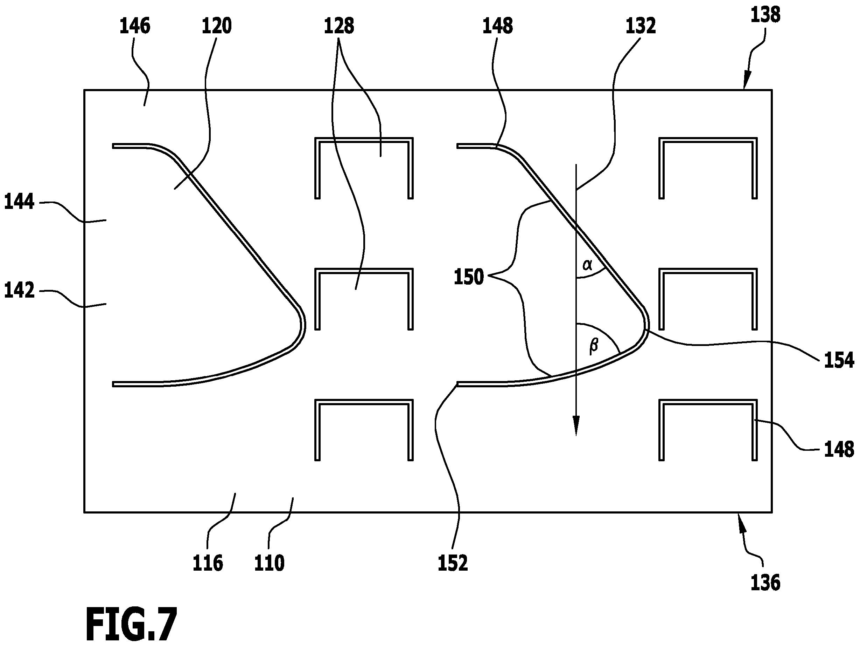

Wie insbesondere Fig. 7 zu entnehmen ist, kann das Dübelelement 104 beispielsweise aus einem Flachbandmaterial 142 gebildet werden.

Das Flachbandmaterial 142 ist vorzugsweise ein Blechmaterial 144, insbesondere ein Metallblech 146.

Zur Herstellung eines Dübelelements 104 wird beispielsweise ein Metallblech 146 mit geeigneten Außenmaßen hergestellt, insbesondere gestanzt oder ausgeschnitten.

Das Metallblech 146 wird zudem mit einem oder mehreren Schnitten 148 versehen. Insbesondere werden mittels der Schnitte 148 die Konturen der Federelemente 120 und der Verankerungselemente 128 in das im Übrigen die Wandung 116 der Hülse 110 bildende Metallblech 146 eingebracht.

Die Schnitte 148 können dabei beispielsweise mittels Laserschneiden, Stanzen, Prägen, etc. in das Metallblech 146 eingebracht werden.

In einem weiteren Bearbeitungsschritt wird das Metallblech 146 umgeformt. Insbesondere wird das Metallblech 146 gebogen, so dass die hohlzylindrische Hülse 110 gebildet wird.

Zudem werden die Federelemente 120 und die Verankerungselemente 128 in die gewünschte Form und Position gebogen.

Sämtliche dieser Umformvorgänge sind vorzugsweise plastische Umformvorgänge, so dass die Federelemente 120 und die Verankerungselemente 128 insbesondere in die in den Fig. 1 bis 6 dargestellten Ruhepositionen (Ruhestellungen) gebracht werden.

Wie insbesondere Fig. 7 zu entnehmen ist, weist ein jedes Federelement 120 zwei seitliche Flanken 150 auf.

Die Flanken 150 erstrecken sich insbesondere von einem an die Hülse 110 angrenzenden Anfangsbereich 152 eines Federelements 120 bis zu einem im montierten Zustand des Dübelelements 104 in den Aufnahmeraum 112 hineinragenden Ende 154 des Federelements 120.

Die Flanken 150 können dabei unterschiedlich geformt sein.

Bei der in den Fig. 1 bis 7 dargestellten Ausführungsform des Dübelelements 104 ist eine der Einbringöffnung 138 zugewandte seitliche Flanke 150 flacher ausgebildet als eine der Einbringöffnung 138 abgewandte seitliche Flanke 150 des Federelements 120.

Dies bedeutet, dass ein Winkel α (alpha), welcher von der der Einbringöffnung 138 zugewandten seitlichen Flanke 150 und der Verbindungsrichtung 132 eingeschlossen ist, kleiner ist als ein Winkel β (beta), welcher von der der Einbringöffnung 138 abgewandten seitlichen Flanke 150 und der Verbindungsrichtung 132 eingeschlossen ist.

Durch eine solche Ausgestaltung der Flanken 150 der Federelemente 120 kann bewirkt werden, dass ein in den Aufnahmeraum 112 des Dübelelements 104 eingebrachtes Befestigungselement 106 bei dessen Bewegung längs der Verbindungsrichtung 132 zunächst einen geringen Widerstand überwinden muss, um längs der flachen Flanke 150 entlang bewegt zu werden und dabei die Federelemente 120 nach außen zu drücken.

Sobald ein Befestigungsabschnitt 114 des Befestigungselements 106 an den Enden 154 des Federelements 120 vorbei bewegt wurde, bewirkt die steile Flanke 150 ein Einziehen des Befestigungselements 106 in den Aufnahmeraum 112, so dass letztlich das Befestigungselement 106 an dem Dübelelement 104 festgelegt ist.

Wie in Fig. 3 durch eine gestrichelte Linie angedeutet ist, kann es vorgesehen sein, dass das Dübelelement 104 an dem der Einbringöffnung 138 zugewandten Ende des Grundkörpers 108 mit einem Kragen 156 oder einem oder mehreren sonstigen radial nach außen ragenden Vorsprüngen versehen ist.

Hierdurch kann insbesondere eine zuverlässige Anlage des Dübelelements 104 an einem Objekt 102 ermöglicht werden.

In den Fig. 8 bis 11 ist eine erste Ausführungsform eines Befestigungselements 106 der Befestigungsvorrichtung 100 dargestellt.

Das Befestigungselement 106 umfasst den bereits erwähnten Befestigungsabschnitt 114, welcher zur Verbindung mit dem Dübelelement 104 in den Aufnahmeraum 112 des Dübelelements 104 einbringbar ist.

Der Befestigungsabschnitt 114 ist insbesondere als eine pilzförmige Verdickung des Befestigungselements 106 ausgebildet.

Beispielsweise weist der Befestigungsabschnitt 114 einen im Wesentlichen T-förmigen Querschnitt auf.

Es kann vorgesehen sein, dass der Befestigungsabschnitt 114 mehrere Unterabschnitte 158 aufweist.

Insbesondere ist ein mittlerer Unterabschnitt 158 im Wesentlichen kreiszylinderförmig ausgebildet.

Zwei zu beiden Seiten des Unterabschnitts 158 angeordnete weitere Unterabschnitte 158 sind beispielsweise im Wesentlichen konusförmig ausgebildet und verjüngen sich insbesondere ausgehend von dem mittleren Unterabschnitt 158 längs der Verbindungsrichtung 132.

Das Befestigungselement 106 umfasst ferner einen Verankerungsabschnitt 160.

Der Verankerungsabschnitt 160 ist beispielsweise als ein Schraubabschnitt 162 ausgebildet und dient der Verankerung des Befestigungselements 106 in einem Objekt 102.

Beispielsweise kann das Befestigungselement 106 mittels des Verankerungsabschnitts 160 in eine Bohrung 164 in einem Objekt 102 eingeschraubt werden.

Das Befestigungselement 106 umfasst vorzugsweise ferner einen Anschlagabschnitt 166.

Der Anschlagabschnitt 166 ist insbesondere an einem dem Befestigungsabschnitt 114 zugewandten Ende des Verankerungsabschnitts 160 angeordnet und dient als Bewegungsbeschränkung bei der Festlegung des Befestigungselements 106 an dem Objekt 102.

Insbesondere kann mittels des Anschlagabschnitts 166 gewährleistet werden, dass das Befestigungselement 106 nur bis in eine vorgegebene Tiefe in das Objekt 102 eingeschraubt werden kann.

Der Anschlagabschnitt 166 ist dabei beispielsweise als ein ringförmiger radial nach außen ragender Vorsprung ausgebildet.

Das Befestigungselement 106 umfasst ferner vorzugsweise einen Verbindungsabschnitt 168.

Der Verbindungsabschnitt 168 ist insbesondere zwischen dem Befestigungsabschnitt 114 und dem Verankerungsabschnitt 160 angeordnet.

Ferner ist der Verbindungsabschnitt 168 vorzugsweise zwischen dem Befestigungsabschnitt 114 und dem Anschlagabschnitt 166 angeordnet.

Der Verbindungsabschnitt 168 ist insbesondere ein Bereich mit im Vergleich zum Befestigungsabschnitt 114 geringer radialer Ausdehnung.

Insbesondere ist mittels des Verbindungsabschnitts 168 zusammen mit dem Befestigungsabschnitt 114 ein im Wesentlichen T-förmiger Längsschnitt des Befestigungselements 106 gebildet. Hierdurch kann das Befestigungselement 106 einfach in den Aufnahmeraum 112 des Dübelelements 104 eingebracht und zuverlässig mittels der Federelemente 120 erfasst und festgelegt werden.

Günstig kann es sein, wenn der Befestigungsabschnitt 114 des Befestigungselements 106 eine Werkzeugaufnahme 170 umfasst.

Die Werkzeugaufnahme 170 ist insbesondere eine Innensechskant-Aufnahme oder eine Kreuzschlitz-Aufnahme oder ähnliches.

An der Werkzeugaufnahme 170 kann vorzugsweise ein hierzu passendes Werkzeug angesetzt werden, beispielsweise um das Befestigungselement 106 einfach in dem Objekt 102 festlegen, beispielsweise in das Objekt 102 einschrauben, zu können.

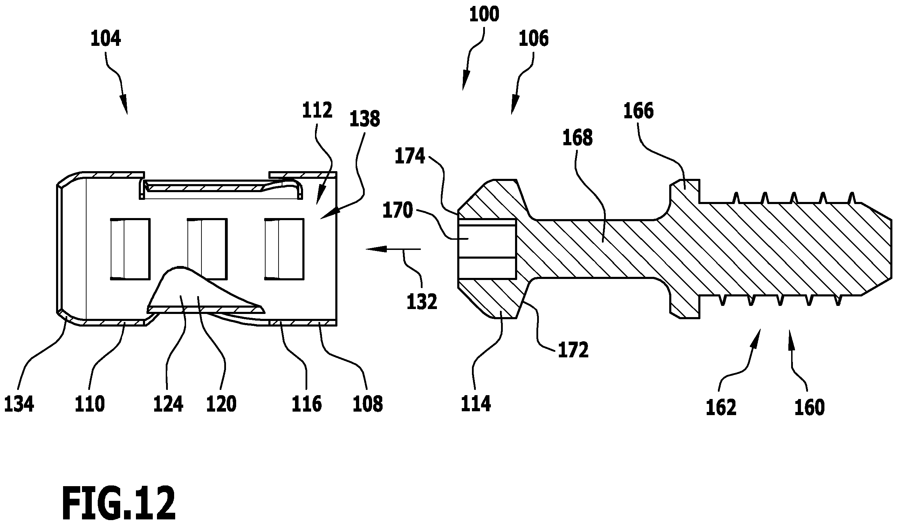

Die Werkzeugaufnahme 170 ist insbesondere an einem dem Verankerungsabschnitt 160 abgewandten Ende des Befestigungsabschnitts 114 angeordnet. In Fig. 12 sind das Dübelelement 104 und das Befestigungselement 106 in einem unmontierten Zustand dargestellt.

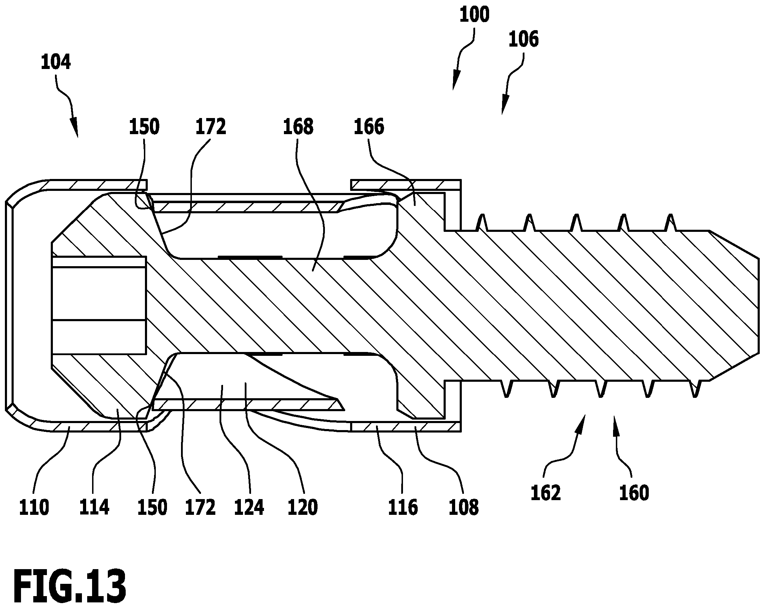

Fig. 13 zeigt das Dübelelement 104 und das Befestigungselement 106 in einem montierten Zustand.

Insbesondere aus einem Vergleich der Fig. 12 und 13 wird ersichtlich, dass die Befestigungsvorrichtung 100 wie folgt funktioniert:
Zunächst wird das Dübelelement 104 in ein Objekt 102, insbesondere in eine Bohrung 164 eines Objekts 102, eingebracht.

Mittels der Verankerungselemente 128 des Dübelelements 104 wird das Dübelelement 104 dabei automatisch gegen eine Bewegung des Dübelelements 104 entgegen der Verbindungsrichtung 132 gesichert.

Das Befestigungselement 106 wird in einem weiteren Objekt 102 festgelegt, beispielsweise in eine Bohrung 164 eines weiteren Objekts 102 eingeschraubt.

In einem nächsten Schritt werden die Objekte 102 aufeinander zubewegt, so dass der Befestigungsabschnitt 114 des Befestigungselements 106 in der Verbindungsrichtung 132 in den Aufnahmeraum 112 des Dübelelements 104 eingebracht wird.

Der Befestigungsabschnitt 114 des Befestigungselements 106 ist vorzugsweise so dimensioniert, dass dieser den Aufnahmeraum 112 in einer senkrecht zur Verbindungsrichtung 132 ausgerichteten Ebene zumindest näherungsweise vollständig ausfüllt und sich somit vorzugsweise umlaufend bis an die Wandung 116 heranerstreckt.

Die Federelemente 120 ragen somit in den Bewegungspfad des Befestigungsabschnitts 114 des Befestigungselements 106 hinein und gelangen somit bei der Bewegung des Befestigungsabschnitts 114 längs der Verbindungsrichtung 132 mit dem Befestigungsabschnitt 114 in Eingriff.

Aufgrund der Ausgestaltung der seitlichen Flanken 150 der Federelemente 120 und/oder aufgrund der Ausgestaltung des einen oder der mehreren Unterabschnitte 158 des Befestigungsabschnitts 114 werden die Federelemente 120 aus der in den Fig. 1 bis 6 dargestellten Ruheposition mittels des Befestigungsabschnitts 114 nach außen gedrückt, bis diese einer weiteren Bewegung des Befestigungsabschnitts 114 längs der Verbindungsrichtung 132 nicht weiter im Wege stehen.

Sobald der Befestigungsabschnitt 114 an den Enden 154 der Federelemente 120 vorbeibewegt wurde, bewirken die der Einbringöffnung 138 des Dübelelements 104 abgewandten seitlichen Flanken 150 der Federelemente 120 eine Einzugsbewegung des Befestigungsabschnitts 114 in den Aufnahmeraum 112, da die Federelemente 120 aufgrund der Rückfederung in den Aufnahmeraum 112 den Befestigungsabschnitt 114 hintergreifen und somit relativ zu dem Dübelelement 104 festlegen.

Insbesondere sind dann die der Einbringöffnung 138 abgewandten seitlichen Flanken 150 der Federelemente 120 in Eingriff mit einem dem Verankerungsabschnitt 160 zugewandten Ende 172 des Befestigungsabschnitts 114.

Da die seitlichen Flanken 150 eines jeden Federelements 120 unterschiedliche Steigungen aufweisen, kann für die Einschubbewegung des Befestigungsabschnitts 114 in den Aufnahmeraum 112 ein anderer Kraftverlauf gewählt werden als für die mittels der Federelemente 120 bewirkte Einzugbewegung des Befestigungsabschnitts 114. Insbesondere kann ein leichtes Einschieben des Befestigungsabschnitts 114 bei zugleich starker Haltekraft im montierten Zustand ermöglicht werden.

Durch geeignete Ausgestaltung der seitlichen Flanken 150 und/oder durch geeignete Ausgestaltung des Befestigungsabschnitts 114 kann eine lösbare oder auch eine unlösbare Verbindung zwischen dem Dübelelement 104 und dem Befestigungselement 106 realisiert werden.

Bei der in den Fig. 1 bis 13 dargestellten Ausführungsform der Befestigungsvorrichtung 100 ist vorgesehen, dass das Befestigungselement 106 bei geeigneter Kraftaufbringung zerstörungsfrei aus dem Dübelelement 104 entfernbar ist.

Nachfolgend werden verschiedene Varianten und Aspekte unterschiedlich ausgebildeter Befestigungsvorrichtungen 100 beschrieben.

Sämtliche beschriebenen Merkmale sind dabei einzeln oder in Kombination mit weiteren Merkmalen beliebig mit einzelnen oder mehreren Merkmalen der vorstehend beschriebenen Befestigungsvorrichtung 100 kombinierbar.

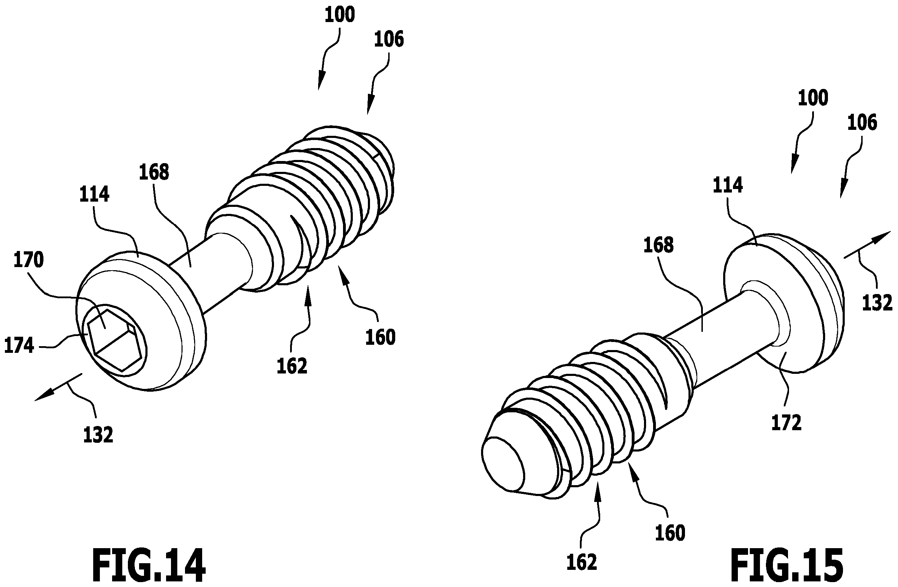

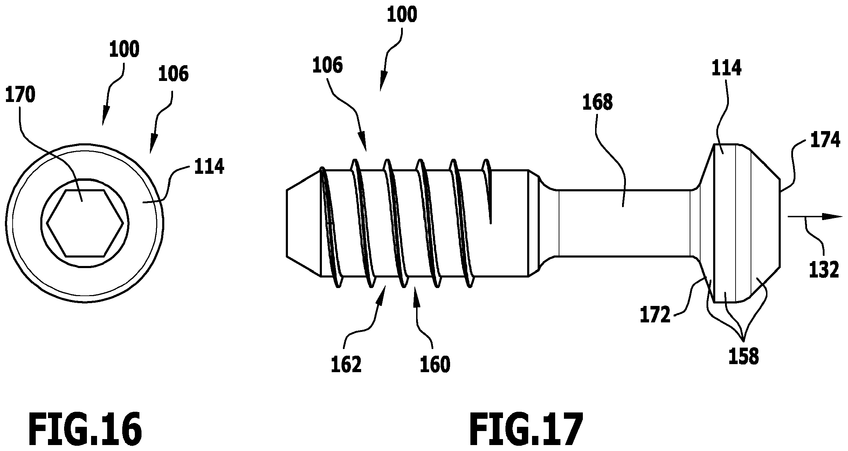

Eine in den Fig. 14 bis 17 dargestellte alternative Ausgestaltung eines Befestigungselements 106 unterscheidet sich von der in den Fig. 8 bis 11 dargestellten Ausführungsform im Wesentlichen dadurch, dass das Befestigungselement 106 keinen Anschlagabschnitt 166 aufweist.

Mittels eines solchen Befestigungselements 106 kann insbesondere eine variable Positionierung in oder an einem Objekt 102 realisiert werden, beispielsweise um unterschiedliche Relativpositionen der miteinander zu verbindenden Objekte 102 gezielt einstellen zu können.

Im Übrigen stimmt die in den Fig. 14 bis 17 dargestellte Ausführungsform des Befestigungselements 106 hinsichtlich Aufbau und Funktion mit der in den Fig. 8 bis 11 dargestellten Ausführungsform überein, so dass auf deren vorstehende Beschreibungen insoweit Bezug genommen wird.

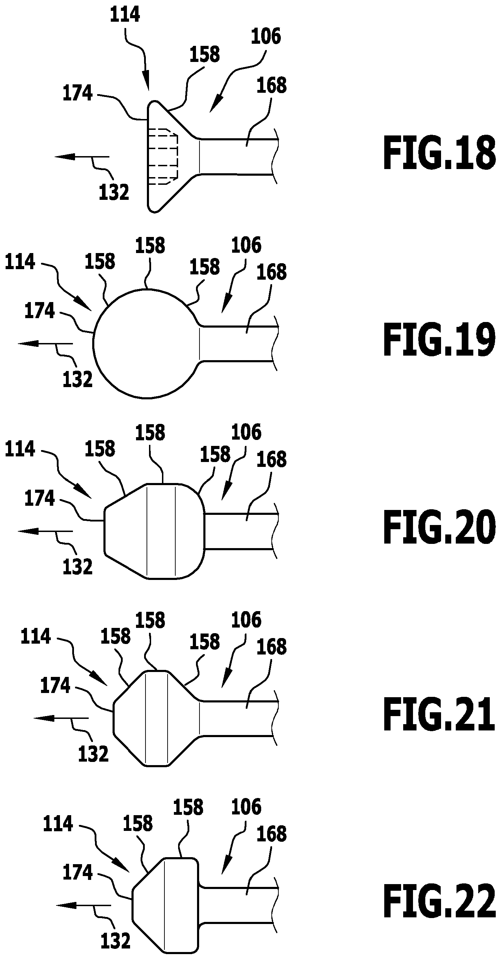

In den Fig. 18 bis 22 sind unterschiedliche Ausgestaltungen von Befestigungsabschnitten 114 dargestellt.

Die Befestigungsabschnitte 114 unterscheiden sich insbesondere durch unterschiedlich ausgebildete Unterabschnitte 158.

Bei Fig. 18 ist lediglich ein im Wesentlichen konischer Unterabschnitt 158 des Befestigungsabschnitts 114 vorgesehen. Dieser Unterabschnitt 158 geht direkt in einen Verbindungsabschnitt 168 über. Ein dem Verbindungsabschnitt 168 abgewandtes Ende 174 ist im Wesentlichen flach ausgebildet und liegt in einer senkrecht zur Verbindungsrichtung 132 verlaufenden Ebene.

Ein Befestigungsabschnitt 114 gemäß Fig. 18 ist beispielsweise ein Schraubenkopf einer handelsüblichen Senkkopfschraube.

In den Fig. 19, 20 und 21 sind unterschiedliche Ausgestaltungen von Befestigungsabschnitten 114 vorgesehen, welche jeweils ausgehend von dem Verbindungsabschnitt 168 einen sich erweiternden Unterabschnitt 158 und schließlich einen sich verjüngenden Unterabschnitt 158 aufweisen.

Gemäß Fig. 19 ist dabei ein im Wesentlichen kugelförmiger Befestigungsabschnitt 114 vorgesehen.

Gemäß Fig. 20 ist ein zumindest näherungsweise kugelabschnittsförmiger erweiternder Unterabschnitt 158 vorgesehen, auf welchen ein kreiszylinderförmiger Unterabschnitt 158 folgt. Auf diesen wiederum folgt ein sich verjüngender konusförmiger Unterabschnitt 158.

Gemäß Fig. 21 ist ein auf den Verbindungsabschnitt 168 folgender sich erweiternder konusförmiger Unterabschnitt 158 vorgesehen. Auf diesen folgt ein kreiszylinderförmiger Unterabschnitt 158. Ein darauffolgender dritter Unterabschnitt 158 ist im Wesentlichen konusförmig und verjüngend ausgebildet.

Gemäß Fig. 22 ist ein auf den Verbindungsabschnitt 168 folgender kreiszylinderförmiger Unterabschnitt 158 vorgesehen, auf welchen ein sich verjüngender konusförmiger Unterabschnitt 158 folgt.

Die in den Fig. 18 bis 22 dargestellten Ausgestaltungen sind Beispiele für unterschiedliche Varianten von Befestigungsabschnitten 114, welche je nach Ausgestaltung der Federelemente 120 des Dübelelements 104 zu unterschiedlichen Montagekräften und/oder Haltekräften der Befestigungsvorrichtung 100 führen können.

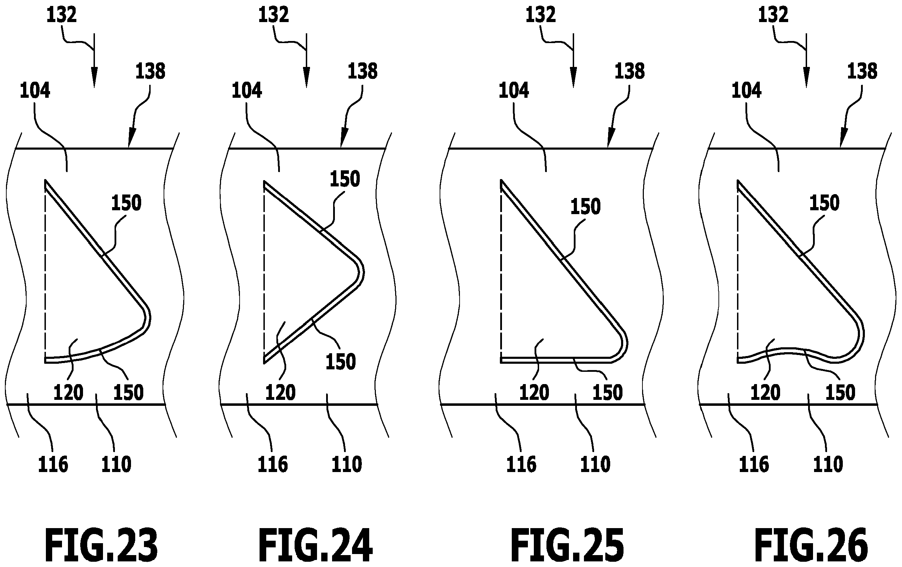

In den Fig. 23 bis 26 sind unterschiedliche Ausgestaltungen von Federelementen 120 dargestellt.

Während bei der in den Fig. 1 bis 7 dargestellten Ausgestaltung der Federelemente 120 die schrägen Flanken 150 erst auf einen geraden Abschnitt des jeweiligen Federelements 120 folgen, sind bei der in Fig. 23 dargestellten Ausführungsform beide schrägen Flanken 150 direkt an die die Wandung 116 bildende Hülse 110 angrenzend ausgebildet.

Bei den Ausführungsformen gemäß den Fig. 23, 25 und 26 sind dabei jeweils die der Einbringöffnung 138 zugewandten seitlichen Flanken 150 länger ausgebildet als die der Einbringöffnung 138 abgewandten seitlichen Flanken 150. Bei sämtlichen Ausgestaltungen ist die der Einbringöffnung 138 zugewandte seitliche Flanke 150 im Wesentlichen geradlinig ausgebildet. Hierdurch kann insbesondere ein gleichmäßiger Kraftverlauf beim Einbringen des Befestigungsabschnitts 114 in den Aufnahmeraum 112 des Dübelelements 104 gewährleistet werden.

Die der Einbringöffnung 138 abgewandten seitlichen Flanken 150 sind dabei beispielsweise gekrümmt ausgebildet (siehe Fig. 23). Ferner kann eine geradlinige Ausgestaltung in einer schräg zur Verbindungsrichtung 132 verlaufenden Richtung vorgesehen sein (siehe Fig. 24), wobei hierbei gemäß einem nicht zur Erfindung gehörenden Ausführungsbeispiel auch vorgesehen sein kann, dass die beiden seitlichen Flanken 150 zumindest näherungsweise dieselben Längen aufweisen.

Die der Einbringöffnung 138 abgewandte seitliche Flanke 150 kann zudem zumindest näherungsweise senkrecht zur Verbindungsrichtung 132 ausgerichtet sein (siehe die Fig. 25 und 26). Durch eine solche Ausgestaltung des jeweiligen Befestigungsabschnitts 114 kann insbesondere eine unlösbare Festlegung des Befestigungselements 106 relativ zu dem Dübelelement 104 realisiert werden.

Je nach Ausgestaltung des Befestigungsabschnitts 114 kann dabei eine geradlinige seitliche Flanke 150, welche der Einbringöffnung 138 abgewandt ist, (siehe Fig. 25) oder eine geschwungene oder wellenförmige Ausgestaltung (siehe Fig. 26) vorteilhaft sein.

Im Übrigen stimmen die in den Fig. 23 bis 26 dargestellten Varianten von Federelementen 120 hinsichtlich Aufbau und Funktion mit den Federelementen 120 gemäß den Fig. 1 bis 7 überein, so dass auf deren vorstehende Beschreibung insoweit Bezug genommen wird.

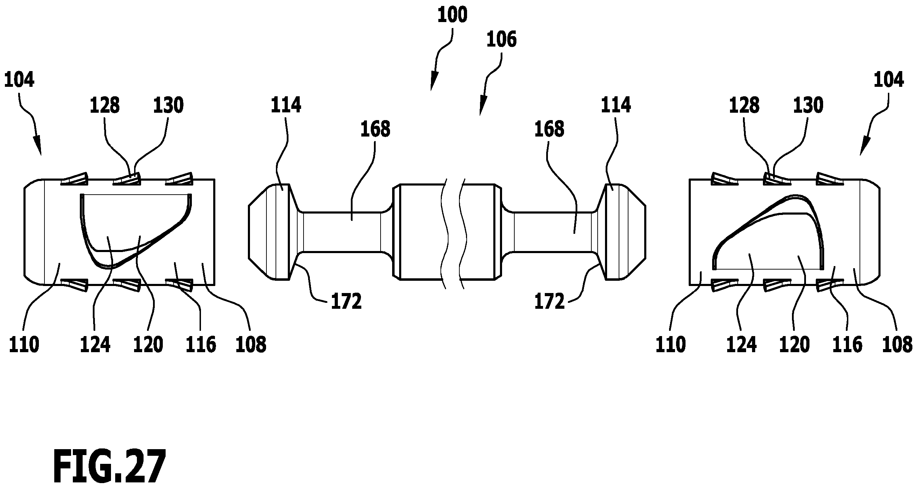

Eine in Fig. 27 dargestellte alternative Ausgestaltung einer Befestigungsvorrichtung 100 unterscheidet sich von der in den Fig. 1 bis 13 dargestellten Ausführungsform im Wesentlichen dadurch, dass das Befestigungselement 106 beidseitig mit Befestigungsabschnitten 114 versehen ist und somit beidseitig mit jeweils einem Dübelelement 104 in Eingriff bringbar ist.

Zur Verbindung zweier Objekte 102 werden somit zwei Dübelelemente 104 benötigt, wobei jeweils ein Dübelelement 104 in einer Bohrung 164 in dem jeweiligen Objekt 102 festgelegt wird.

Die Verbindung zwischen den zwei Dübelelementen 104 und somit zwischen den zwei Objekten 102 erfolgt dann mittels des Befestigungselements 106, indem jeweils ein Befestigungsabschnitt 114 in jeweils ein Dübelelement 104 eingebracht und darin festgelegt wird.

Im Übrigen stimmt die in Fig. 27 dargestellte Ausführungsform der Befestigungsvorrichtung 100 hinsichtlich Aufbau und Funktion mit der in den Fig. 1 bis 13 dargestellten Ausführungsform überein, so dass auf deren vorstehende Beschreibung insoweit Bezug genommen wird.

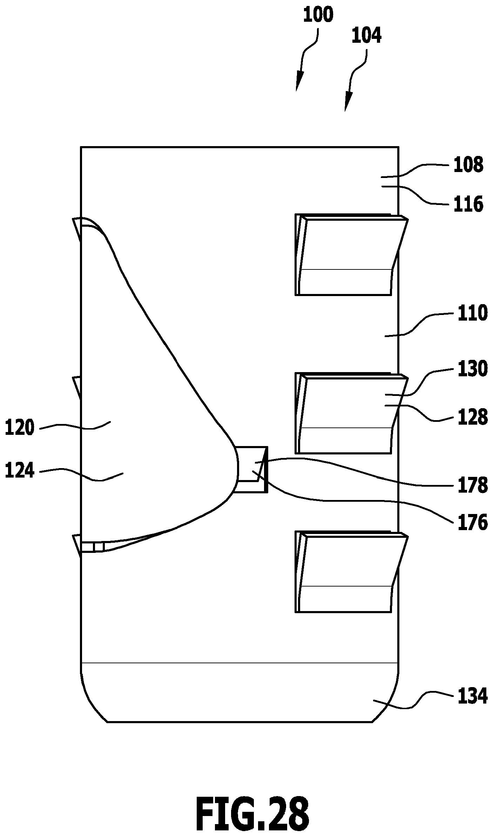

Eine in den Fig. 28 bis 30 dargestellte alternative Ausführungsform eines Dübelelements 104 unterscheidet sich von der in den Fig. 1 bis 7 dargestellten Ausführungsform im Wesentlichen dadurch, dass das Dübelelement 104 ein Arretierelement 176 umfasst.

Mittels des Arretierelements 176 ist insbesondere ein Federelement 120 in einer vorgespannten Stellung arretierbar.

Das Arretierelement 176 kann dabei beispielsweise als Sperrklinke 178 ausgebildet sein, welche in einem Bewegungsweg des Federelements 120 einbringbar ist.

Das Arretierelement 176 ist vorzugsweise durch einen Wandungsabschnitt 118 des Grundkörpers 108 gebildet.

Insbesondere ist das Arretierelement 176 einstückig mit dem Grundkörper 108, den Federelementen 120 und den Verankerungselementen 128 ausgebildet.

Das Arretierelement 176 ist vorzugsweise aus einer in den Fig. 28 bis 30 dargestellten Arretierposition in eine (nicht dargestellte) Freigabeposition bringbar.

In der Arretierposition ragt das Arretierelement 176 vorzugsweise in den Aufnahmeraum 112 des Dübelelements 104 hinein. Insbesondere blockiert das

Arretierelement 176 dabei eine in den Aufnahmeraum 112 hinein gerichtete Bewegung des Federelements 120, wenn dieses aus der in den Fig. 1 bis 6 dargestellten Ruheposition nach außen bewegt wurde, insbesondere bis in eine vorspannte Stellung (vorgespannter Zustand), in welcher das Federelement 120 einen Bestandteil der Wandung 116 und/oder der Hülse 110 bildet.

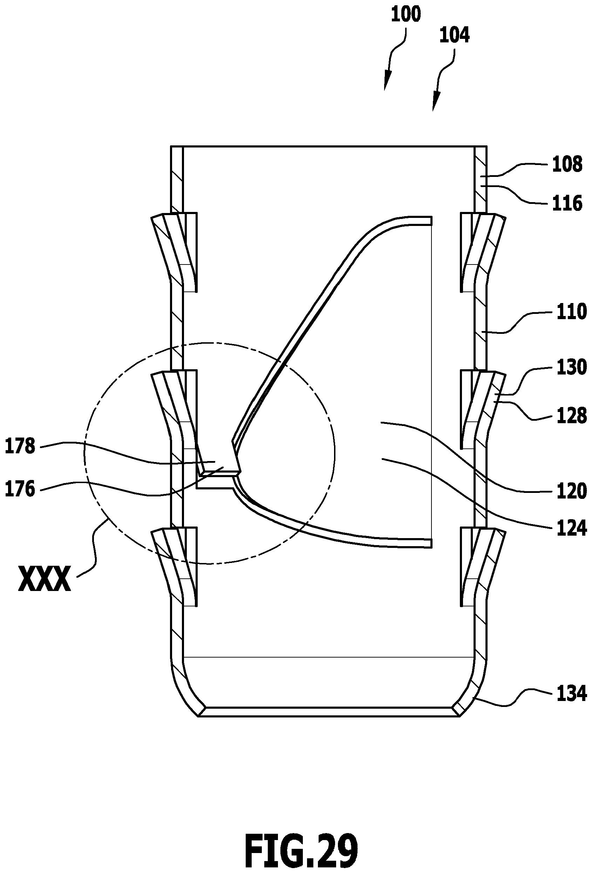

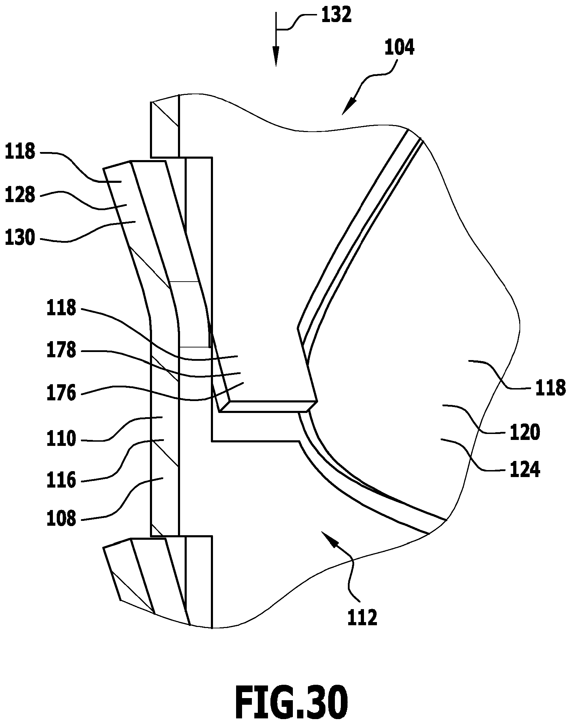

Wie insbesondere aus den Fig. 29 und 30 hervorgeht, ragt das Arretierelement 176 vorzugsweise derart in den Aufnahmeraum 112 des Dübelelements 104 hinein, dass das Arretierelement 176 beim Einbringen eines Verbindungsabschnitts 114 eines Befestigungselements 106 betätigbar ist.

Insbesondere ist das Arretierelement 176 vorzugsweise mittels des Befestigungsabschnitts 114 eines Befestigungselements 106 aus der in den Fig. 28 bis 30 dargestellten Arretierstellung in eine Freigabestellung bewegbar. Insbesondere ist das Arretierelement 176 hierbei aus dem Aufnahmeraum 112 entfernbar. Das Federelement 120 wird dabei vorzugsweise freigegeben, so dass dieses federnd zurück in die in den Fig. 1 bis 6 dargestellte Ruheposition gelangen und insbesondere einen Befestigungsabschnitt 114 eines Befestigungselements 106 ergreifen kann.

Das Dübelelement 104 kann dabei ein oder mehrere Arretierelemente 176 aufweisen.

Insbesondere können ein oder mehrere Arretierelemente 176 für ein oder mehrere Federelemente 120 vorgesehen sein.

Im Übrigen stimmt die in den Fig. 28 bis 30 dargestellte Ausgestaltung eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

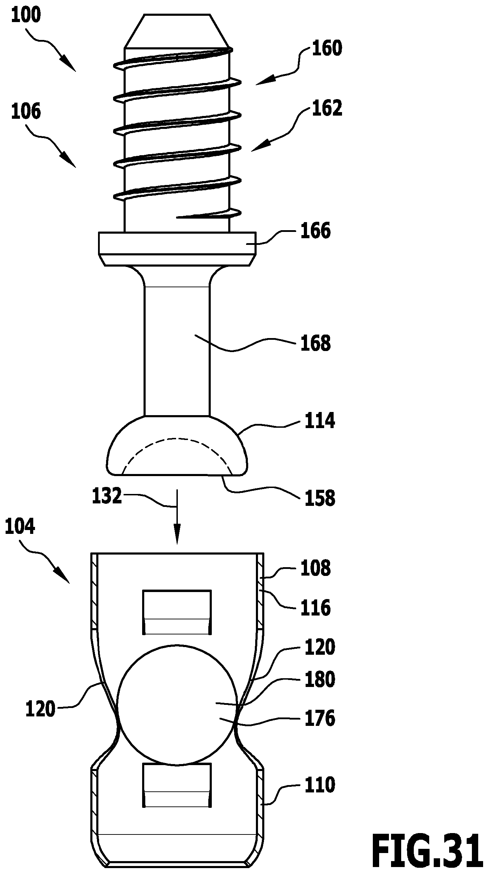

Eine in Fig. 31 dargestellte alternative Ausführungsform einer Befestigungsvorrichtung 100 unterscheidet sich von der in den Fig. 1 bis 13 dargestellten Ausführungsform im Wesentlichen dadurch, dass ähnlich der in den Fig. 28 bis 30 dargestellten Ausführungsform eines Dübelelements 104 ein Arretierelement 176 zur Vorspannung eines oder mehrerer Federelemente 120 vorgesehen ist.

Das Arretierelement 176 ist dabei jedoch nicht Bestandteil des Grundkörpers 108 des Dübelelements 104, sondern ein zusätzliches Bauteil.

Das Arretierelement 176 ist beispielsweise als eine Arretierkugel 180 ausgebildet und in dem Aufnahmeraum 112 des Dübelelements 104 angeordnet.

Ein Befestigungsabschnitt 114 des Befestigungselements 106 weist vorzugsweise einen zumindest abschnittsweise komplementär zu der Arretierkugel 180 ausgebildeten Unterabschnitt 158 auf.

Der Befestigungsabschnitt 114 des Befestigungselements 106 ist hierdurch einfach mit der Arretierkugel 180 in Eingriff bringbar, um die Arretierkugel 180 in der Verbindungsrichtung 132 zu bewegen und somit die vorgespannten Federelemente 120 freizugeben.

Im Übrigen stimmt die in Fig. 31 dargestellte Ausführungsform einer Befestigungsvorrichtung 100 hinsichtlich Aufbau und Funktion mit der in den Fig. 1 bis 13 dargestellten Ausführungsform überein, so dass auf deren vorstehende Beschreibung soweit Bezug genommen wird.

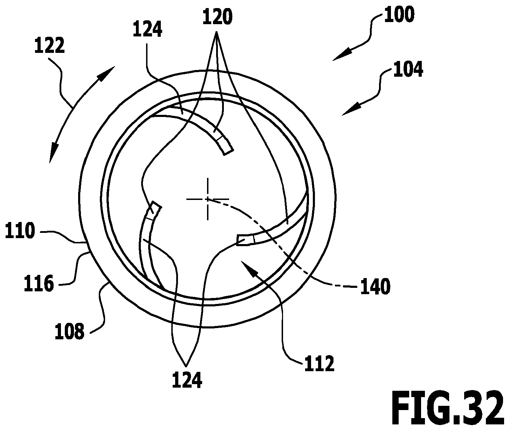

Eine in Fig. 32 dargestellte alternative Ausgestaltung eines Dübelelements 104 unterscheidet sich von der in den Fig. 1 bis 7 dargestellten Ausführungsform im Wesentlichen dadurch, dass das Dübelelement 104 drei Federelemente 120 umfasst.

Bei weiteren Ausgestaltungen von Dübelelementen 104 können ferner auch nur einzelne Federelemente 120 oder vier, fünf oder mehr als fünf Federelemente 120 vorgesehen sein.

Im Übrigen stimmt die in Fig. 32 dargestellte Ausführungsform eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

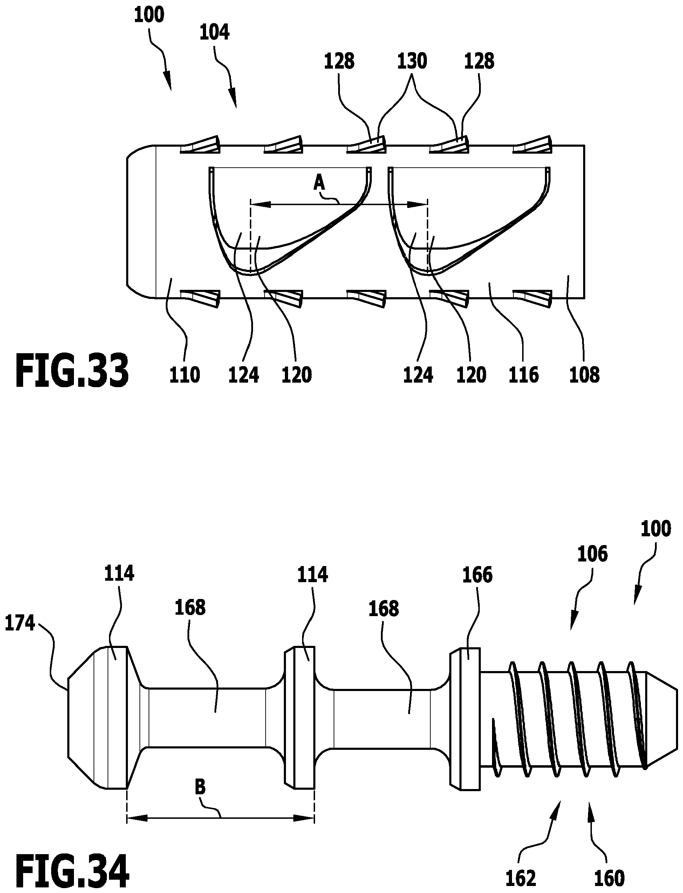

Eine in den Fig. 33 und 34 dargestellte Ausführungsform einer Befestigungsvorrichtung 100 unterscheidet sich von der in den Fig. 1 bis 13 dargestellten Ausführungsform im Wesentlichen dadurch, dass das Dübelelement 104 mehrere in der Verbindungsrichtung 132 hintereinander angeordnete Federelemente 120 umfasst.

Zudem umfasst das Befestigungselement 106 vorzugsweise mehrere in der Verbindungsrichtung 132 hintereinander angeordnete Befestigungsabschnitte 114.

Durch die Verwendung mehrerer in der Verbindungsrichtung 132 hintereinander angeordneter Federelemente 120 kann eine Festlegung eines Befestigungselements 106 in unterschiedlichen Positionen relativ zu dem Dübelelement 104 realisiert werden.

Ferner ist eine Festlegung des Befestigungselements 106 in unterschiedlichen Positionen relativ zu dem Dübelelement 104 vorzugsweise dadurch möglich, dass das Befestigungselement 106 mehrere in der Verbindungsrichtung 132 hintereinander angeordnete Befestigungsabschnitte 114 aufweist.

Günstig kann es sein, wenn ein längs der Verbindungsrichtung 132 genommener Abstand A zwischen zwei hintereinander angeordneten Federelementen 120 sich von einem längs der Verbindungsrichtung 132 genommenen Abstand B zwischen zwei hintereinander angeordneten Befestigungsabschnitten 114 unterscheidet. Hierdurch kann insbesondere eine eng abgestufte Verrastung des Befestigungselements 106 mit dem Dübelelement 104 realisiert werden.

Im Übrigen stimmt die in den Fig. 33 und 34 dargestellte Ausführungsform einer Befestigungsvorrichtung 100 hinsichtlich Aufbau und Funktion mit der in den Fig. 1 bis 13 dargestellten Ausführungsform überein, so dass auf deren vorstehende Beschreibung insoweit Bezug genommen wird.

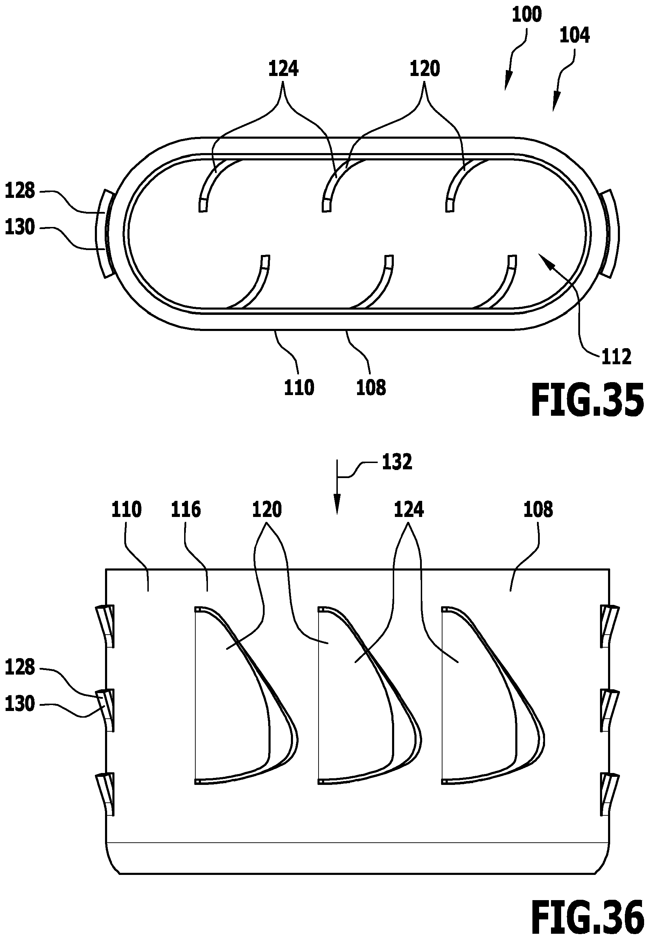

Eine in den Fig. 35 bis 38 dargestellte Ausführungsform einer Befestigungsvorrichtung 100 unterscheidet sich von der in den Fig. 1 bis 13 dargestellten Ausführungsform im Wesentlichen dadurch, dass sowohl das Dübelelement 104 als auch das Befestigungselement 106 einen senkrecht zur Verbindungsrichtung 132 genommenen länglichen Querschnitt aufweisen.

Hierdurch kann beispielsweise eine bezüglich der Verbindungsrichtung 132 drehfeste Verbindung zwischen zwei Objekten 102 realisiert werden.

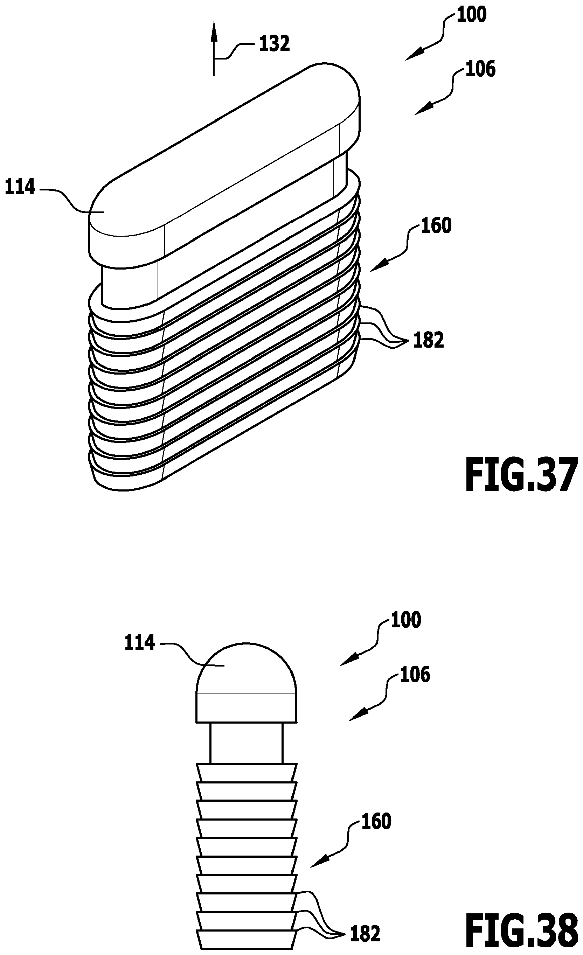

Wie insbesondere den Fig. 37 und 38 zu entnehmen ist, kann bei einem Befestigungselement 106 insbesondere anstelle eines Schraubabschnitts 162 auch ein mit einer Riffelung 182 oder mit sonstigen Rillen oder seitlichen Auswölbungen versehener Verankerungsabschnitt 160 zur Verankerung des Befestigungselements 106 in einem Objekt 102 vorgesehen sein.

Eine solche Ausgestaltung eines Verankerungsabschnitts 160 ist insbesondere unabhängig von einer Querschnittsform des Befestigungselements 106 und/oder des Dübelelements 104.

Im Übrigen stimmt die in den Fig. 35 bis 38 dargestellte Ausführungsform einer Befestigungsvorrichtung 100 hinsichtlich Aufbau und Funktion mit der in den Fig. 1 bis 13 dargestellten Ausführungsform überein, so dass auf deren vorstehende Beschreibung insoweit Bezug genommen wird.

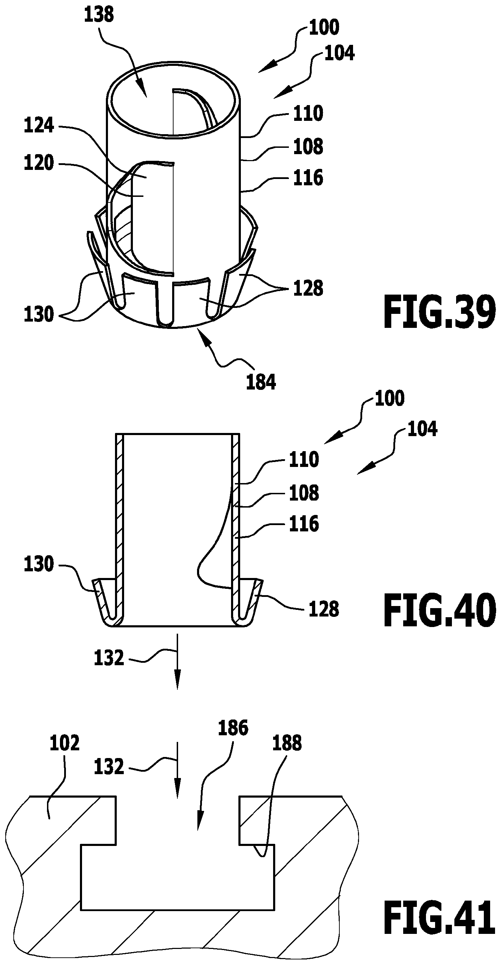

Eine in den Fig. 39 bis 41 dargestellte alternative Ausgestaltung eines Dübelelements 104 unterscheidet sich von der in den Fig. 1 bis 7 dargestellten Ausführungsform im Wesentlichen dadurch, dass ein der Einbringöffnung 138 abgewandtes Ende 184 der Hülse 110 ringförmig nach außen umgebogen oder umgebördelt ist. Zudem sind vorzugsweise längs der Verbindungsrichtung 132 verlaufende Schlitze in diesem umgebogenen oder umgebördelten Teil der Hülse 110 vorgesehen, so dass mehrere als Widerhaken 130 fungierende Verankerungselemente 128 des Dübelelements 104 gebildet sind.

Die Verankerungselemente 128 sind dabei insbesondere ringförmig angeordnet.

Ein solches Dübelelement 104 ist insbesondere in einer Nut 186 in einem Objekt 102 festlegbar, welche bezüglich der Verbindungsrichtung 132 einen Hinterschneidungsabschnitt 188 aufweist.

Eine solche Nut 186 ist beispielsweise mittels eines T-Fräsers, insbesondere durch Bohren und Zirkularfräsen, herstellbar.

Im Übrigen stimmt die in den Fig. 39 bis 41 dargestellte Ausführungsform eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

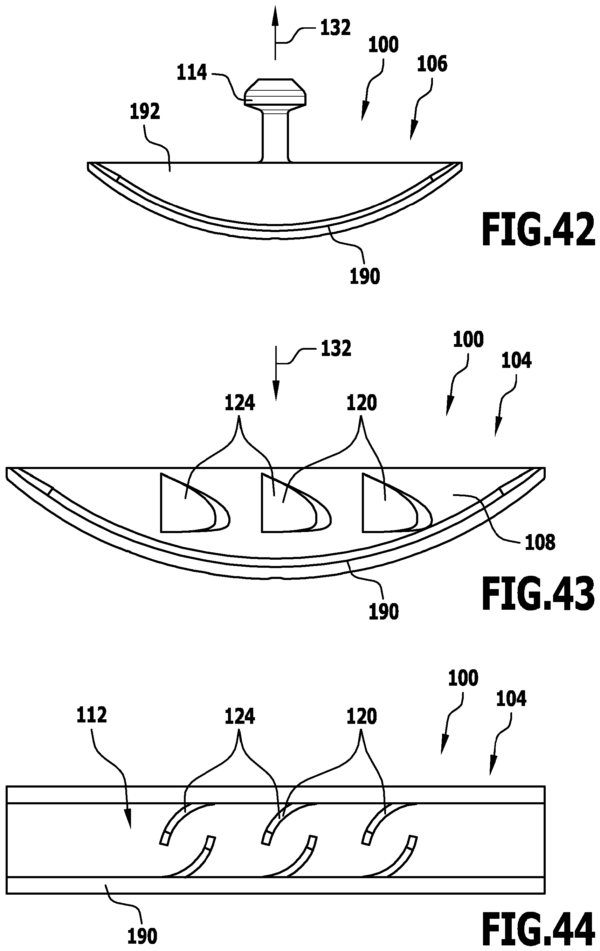

In den Fig. 42 bis 44 ist eine alternative Ausgestaltung eines Verankerungsabschnitts 160 eines Befestigungselements 106 (siehe Fig. 42) bzw. eine alternative Ausgestaltung von Verankerungselementen 128 eines Dübelelements 104 (siehe die Fig. 43 und 44) dargestellt.

Zur Verankerung des Befestigungselements 106 bzw. des Dübelelements 104 sind dabei kreisbogenabschnittförmige nicht-selbstschneidende Verankerungsvorsprünge 190 vorgesehen.

Die Verankerungsvorsprünge 190 ragen dabei jeweils im Wesentlichen senkrecht zur Verbindungsrichtung 132 seitlich von einem Grundkörper 108 des Dübelelements 104 bzw. einem Grundkörper 192 des Befestigungselements 106 weg.

Mittels der Verankerungsvorsprünge 190 sind das Befestigungselement 106 und das Dübelelement 104 insbesondere in (nicht dargestellte) Nuten in den Objekten 102 einbringbar, welche im Wesentlichen komplementär zu den Verankerungsvorsprüngen 190 ausgebildete Hinterschneidungsabschnitte aufweisen.

Die genaue Ausgestaltung der Grundkörper 108 bzw. 192 und der daran angeordneten Verankerungsvorsprünge 190 zur Verankerung in den Objekten 102 ist insbesondere in der EP 1 990 549 A1 beschrieben, auf welche hiermit ausdrücklich Bezug genommen wird und deren Inhalt hiermit durch in Bezugnahme zum Bestandteil dieser Beschreibung gemacht wird.

Die in Fig. 42 dargestellte Ausführungsform eines Befestigungselements 106 ist beispielsweise mit einem Dübelelement 104 gemäß den Fig. 1 bis 7 in Eingriff bringbar.

Die in den Fig. 43 und 44 dargestellte Ausführungsform eines Dübelelements 104 ermöglicht beispielsweise die Aufnahme eines Befestigungselements 106 gemäß den Fig. 37 und 38.

Im Übrigen wird daher hinsichtlich Aufbau und Funktion des Befestigungselements 106 aus Fig. 42 bzw. des Dübelelements 104 gemäß den Fig. 43 und 44 auf die Beschreibung betreffend die genannten weiteren Ausführungsformen Bezug genommen.

Eine in Fig. 45 dargestellte alternative Ausgestaltung eines Dübelelements 104 unterscheidet sich von der in den Fig. 1 bis 7 dargestellten Ausführungsform im Wesentlichen dadurch, dass die Befestigungsöffnung 136 einen geringeren Querschnitt aufweist.

Die Befestigungsöffnung 136 ermöglicht dabei die Durchführung eines Schraubenteils 194 einer Schraube 196.

Ein Schraubenkopf 198 der Schraube 196 ist jedoch vorzugsweise größer als Befestigungsöffnung 136 ausgebildet, so dass dieser in der Verbindungsrichtung 132 nicht durch die Befestigungsöffnung 136 hindurchbewegt werden kann.

Mittels der Schraube 196 kann das Dübelelement 104 somit an ein Objekt 102 angeschraubt werden.

Im Übrigen stimmt die in Fig. 45 dargestellte Ausführungsform eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

Eine in Fig. 46 dargestellte alternative Ausgestaltung eines Dübelelements 104 unterscheidet sich von der in den Fig. 1 bis 7 dargestellten Ausführungsform im Wesentlichen dadurch, dass das Dübelelement 104 eine oder mehrere Flüssigkeitsaufnahmen 200 umfasst.

Eine Flüssigkeitsaufnahme 200 dient insbesondere der Aufnahme einer Flüssigkeit, beispielsweise Klebstoff.

Die Flüssigkeitsaufnahme 200 ist insbesondere in einem Bereich des Dübelelements 104 angeordnet, welcher beim Einbringen eines Befestigungsabschnitts 114 des Befestigungselements 106 in den Aufnahmeraum 112 bewegt oder von dem Befestigungsabschnitt 114 erfasst wird.

Durch das Einbringen des Befestigungsabschnitts 114 in den Aufnahmeraum 112 des Dübelelements 104 ist die Flüssigkeitsaufnahme 200 vorzugsweise beschädigbar, so dass die darin aufgenommene Flüssigkeit austreten kann. Insbesondere kann es hierdurch ermöglich werden, dass bei der Festlegung des Befestigungsabschnitts 114 in dem Aufnahmeraum 112 des Dübelelements 104 zugleich Klebstoff freigesetzt wird, welcher eine zusätzliche, insbesondere stoffschlüssige, Verbindung zwischen dem Dübelelement 104, dem Befestigungselement 106 und/oder einem oder mehreren Objekten 102 ermöglicht.

Im Übrigen stimmt die in Fig. 46 dargestellte Ausführungsform eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

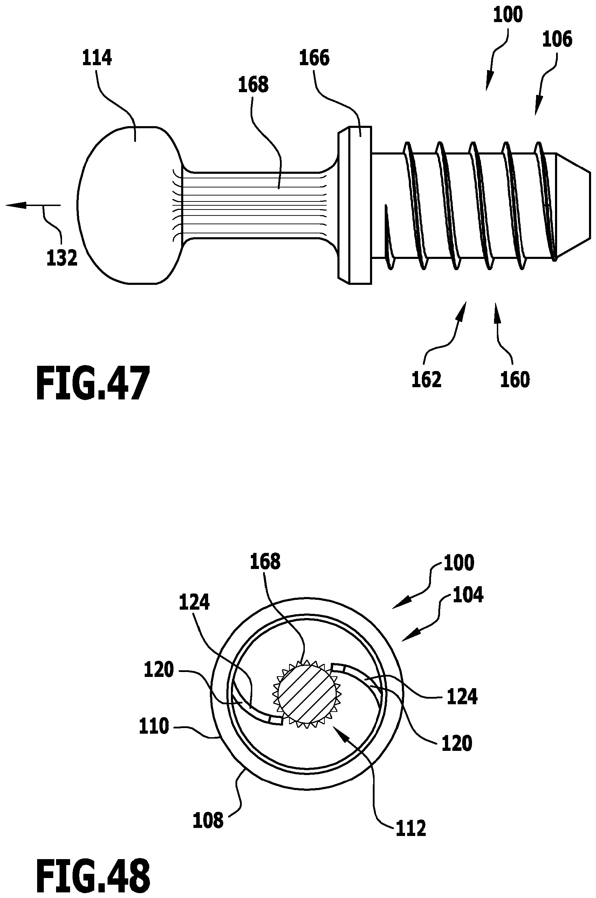

Eine in den Fig. 47 und 48 dargestellte Ausführungsform einer Befestigungsvorrichtung 100 unterscheidet sich von der in den Fig. 1 bis 13 dargestellten Ausführungsform im Wesentlichen dadurch, dass der Verbindungsabschnitt 168 des Befestigungselements 106 konturiert ausgebildet ist.

Beispielsweise kann eine Randrierung des Verbindungsabschnitts 168 vorgesehen sein.

Insbesondere sind längs der Verbindungsrichtung 132 verlaufende Rillen vorgesehen.

Da der Verbindungsabschnitt 168 im montierten Zustand der Befestigungsvorrichtung 100 vorzugsweise mit den Enden 154 der Federelemente 120 in Kontakt ist, kann durch die konturierte Ausgestaltung des Verbindungsabschnitts 168 vorzugsweise eine Kraftübertragung von den Enden 154 der Federelemente 120 auf das Befestigungselement 106 oder umgekehrt bewirkt werden. Diese Kraftübertragung kann beispielsweise dazu genutzt werden, eine Drehbewegung von dem Befestigungselement 106 auf das Dübelelement 104 zu übertragen. Ferner kann die Kraftübertragung zur drehfesten Festlegung des Befestigungselements 106 relativ zu dem Dübelelement 104 dienen.

Wie insbesondere Fig. 48 zu entnehmen ist, ragen die Federelemente 120 vorzugsweise spiralförmig in den Aufnahmeraum 112 hinein. Hierdurch kann je nach Ausgestaltung des konturierten Verbindungsabschnitts 168 und/oder der Enden 154 der Federelemente 120 ferner ermöglicht werden, dass das Befestigungselement 106 relativ zu dem Dübelelement 104 in einer Drehrichtung um die Verbindungsrichtung 132 drehbar ist, während eine Drehbewegung in entgegengesetzter Drehrichtung mittels der Federelemente 120 blockierbar ist.

Im Übrigen stimmt die in den Fig. 47 und 48 dargestellte Ausführungsform einer Befestigungsvorrichtung 100 hinsichtlich Aufbau und Funktion mit der in den Fig. 1 bis 13 dargestellten Ausführungsform überein, so dass auf deren vorstehende Beschreibung insoweit Bezug genommen wird.

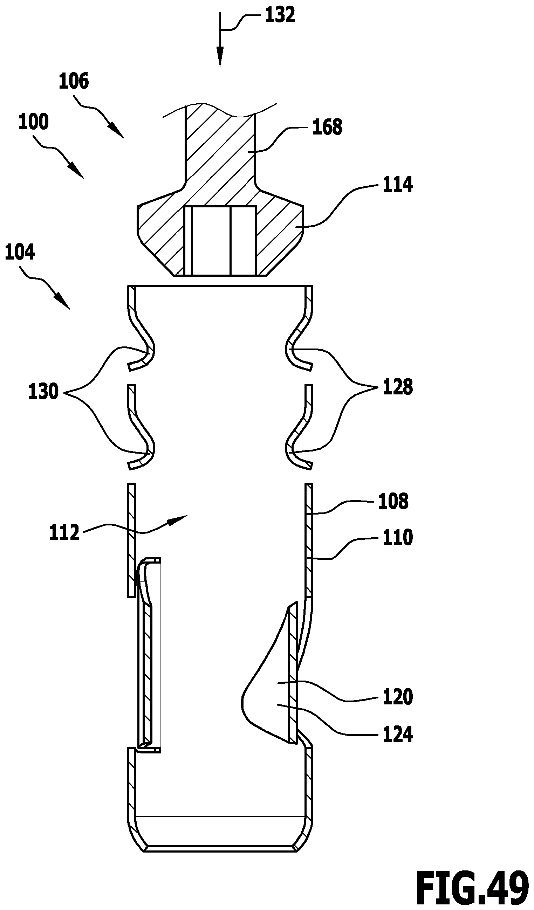

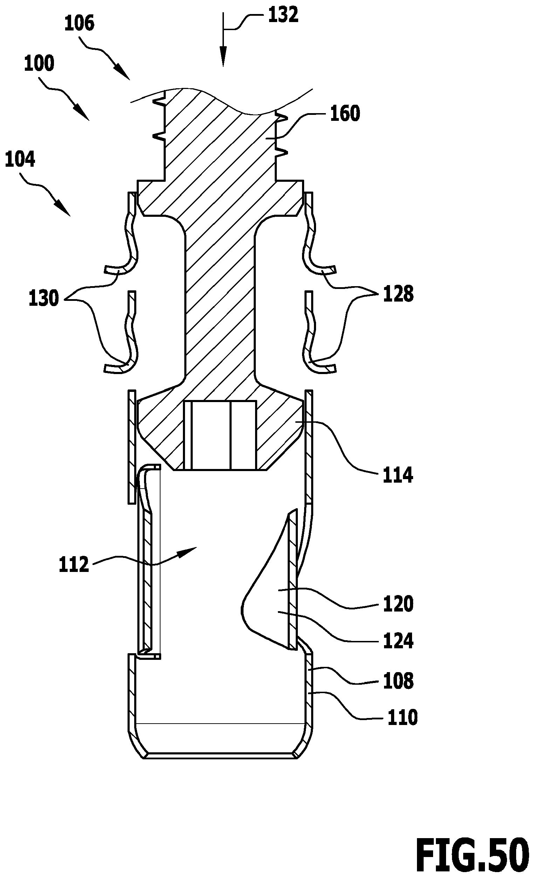

Eine in den Fig. 49 und 50 dargestellte alternative Ausführungsform einer Befestigungsvorrichtung 100 unterscheidet sich von der in den Fig. 1 bis 13 dargestellten Ausführungsform im Wesentlichen dadurch, dass das Dübelelement 104 mehrere Verankerungselemente 128 aufweist, welche in einem zur Montage der Befestigungsvorrichtung 100 vorbereiteten Zustand zumindest abschnittsweise in den Aufnahmeraum 112 des Dübelelements 104 hineinragen (siehe Fig. 49). Insbesondere ragen die Verankerungselemente 128 in diesem zur Montage vorbereiteten Zustand vorzugsweise nicht über die Hülse 110 des Dübelelements 104 nach außen hinaus.

Durch geeignete Formgebung der Verankerungselemente 128 sind diese vorzugsweise mittels des Befestigungsabschnitts 114 eines Befestigungselements 106 betätigbar, wenn der Befestigungsabschnitt 114 in den Aufnahmeraum 112 des Dübelelements 104 eingeführt wird.

Die Verankerungselemente 128 sind dabei vorzugsweise aus der in Fig. 49 dargestellten Ausgangsstellung in die in Fig. 50 dargestellte Verankerungsstellung bringbar.

Die Verankerungselemente 128 werden dabei vorzugsweise plastisch umgeformt, so dass die Verankerungselemente 128 nach der Umformung derselben mittels des Befestigungsabschnitts 114 in der in Fig. 50 dargestellten Verankerungsstellung verbleiben und somit das Dübelelement 104 in einem Objekt 102 fixieren.

Im Übrigen stimmt die in den Fig. 49 und 50 dargestellte Ausführungsform einer Befestigungsvorrichtung 100 hinsichtlich Aufbau und Funktion mit der in den Fig. 1 bis 13 dargestellten Ausführungsform überein, so dass auf deren vorstehende Beschreibung Bezug genommen wird.

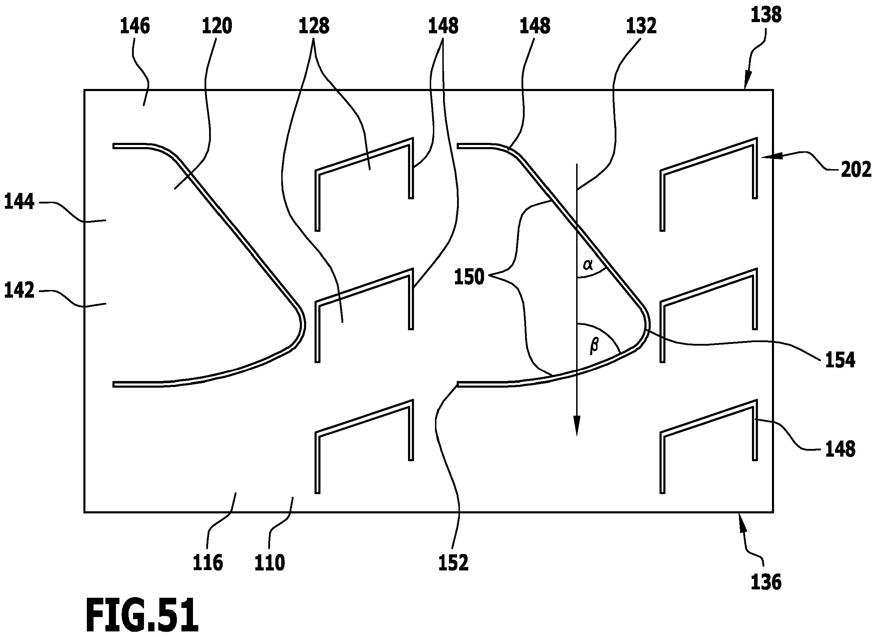

Eine in Fig. 51 dargestellte alternative Ausführungsform eines Dübelelements 104 unterscheidet sich von der in den Fig. 1 bis 7 dargestellten Ausführungsform im Wesentlichen dadurch, dass die Verankerungselemente 128, insbesondere durch geeignete Ausgestaltung der Schnitte 148, schräg zur Verbindungsrichtung 132 ausgerichtet sind.

Mittels der Verankerungselemente 128 ist hierdurch vorzugsweise ein fragmentiertes Außengewinde 202 des Dübelelements 104 gebildet.

Insbesondere kann das Dübelelement 104 dabei durch eine Drehung desselben um eine parallel zur Verbindungsrichtung 132 verlaufende Längsmittelachse 140 des Dübelelements 104 aus einer Bohrung 164 eines Objekts 102 heraus- oder in die Bohrung 164 des Objekts 102 hineingeschraubt werden.

Beispielsweise durch eine Kombination eines solchen Dübelelements 104 mit einem Befestigungselement 106 gemäß Fig. 47 kann es dadurch ermöglicht werden, dass ein in einem Objekt 102 angeordnetes Dübelelement 104 durch Drehen eines darin festgelegten Befestigungselements 106 aus dem Objekt 102 herausgeschraubt wird.

Im Übrigen stimmt die in Fig. 51 dargestellte Ausgestaltung eines Dübelelements 104 hinsichtlich Aufbau und Funktion mit der in den Fig. 1 bis 7 dargestellten Ausführungsform überein, so dass auf deren vorstehende Beschreibung insoweit Bezug genommen wird.

Bei weiteren (nicht dargestellten) Ausführungsformen von Befestigungsvorrichtungen 100 können einzelne oder mehrere Merkmale der vorstehend beschriebenen Ausführungsformen von Befestigungsvorrichtungen 100 beliebig miteinander kombiniert werden. Beispielsweise kann das Dübelelement 104 gemäß den Fig. 49 und 50 mit drei Federelementen 120 gemäß Fig. 32 versehen sein. Ferner kann beispielsweise auch bei dem Befestigungselement 106 gemäß Fig. 34 eine Konturierung des Verbindungsabschnitts 168 gemäß Fig. 47 vorgesehen sein.

### Bezugszeichenliste

- 100: Befestigungsvorrichtung
- 102: Objekt
- 104: Dübelelement
- 106: Befestigungselement
- 108: Grundkörper (des Dübelelements 104)
- 110: Hülse
- 112: Aufnahmeraum
- 114: Befestigungsabschnitt
- 116: Wandung
- 118: Wandungsabschnitt
- 120: Federelement
- 122: Umfangsrichtung
- 124: Rastfeder
- 126: Lasche
- 128: Verankerungselement
- 130: Widerhaken
- 132: Verbindungsrichtung
- 134: Einführschräge
- 136: Befestigungsöffnung
- 138: Einbringöffnung
- 140: Längsmittelachse
- 142: Flachbandmaterial
- 144: Blechmaterial
- 146: Metallblech
- 148: Schnitt
- 150: Flanke
- 152: Anfangsbereich
- 154: Ende (des Federelements 120)
- 156: Kragen
- 158: Unterabschnitt
- 160: Verankerungsabschnitt
- 162: Schraubabschnitt
- 164: Bohrung
- 166: Anschlagabschnitt
- 168: Verbindungsabschnitt
- 170: Werkzeugaufnahme
- 172: Ende (160 zugewandt)
- 174: Ende (160 abgewandt)
- 176: Arretierelement
- 178: Sperrklinke
- 180: Arretierkugel
- 182: Riffelung
- 184: Ende (138 abgewandt)
- 186: Nut
- 188: Hinterschneidungsabschnitt
- 190: Verankerungsvorsprung
- 192: Grundkörper (des Befestigungselements 106)
- 194: Schraubenteil
- 196: Schraube
- 198: Schraubenkopf
- 200: Flüssigkeitsaufnahme
- 202: Außengewinde
- α: (alpha) Winkel
- β: (beta) Winkel
- A: Abstand
- B: Abstand

## Patentansprüche

1. Dübelelement (104) zur Befestigung eines Objekts (102) an einem weiteren Objekt (102), wobei das Dübelelement (104) einen zumindest abschnittsweise hohl ausgebildeten Grundkörper (108) umfasst, welcher einen Aufnahmeraum (112) zur Aufnahme eines Befestigungselements (106) umgibt, wobei der Grundkörper (108) eine Einbringöffnung (138) zum Einbringen des Befestigungselements (106) in den Aufnahmeraum (112) umfasst, wobei der Grundkörper (108) ein oder mehrere elastisch nachgiebige Federelemente (120) umfasst, welche durch einen oder mehrere Wandungsabschnitte (118) des Grundkörpers (108) gebildet sind, die in einem montierten Zustand des Dübelelements (104) in den Aufnahmeraum (112) hineinragen,
**dadurch gekennzeichnet, dass** ein oder mehrere Federelemente (120) des Grundkörpers (108) jeweils zwei seitliche Flanken (150) aufweisen, wobei die Flanken (150) mit einer Verbindungsrichtung (132) des Dübelelements (104) voneinander verschiedene Winkel (α (alpha), β (beta)) einschließen und wobei eine der Einbringöffnung (138) zugewandte seitliche Flanke (150) eines jeden Federelements (120) mit der Verbindungsrichtung (132) einen kleineren Winkel einschließt als eine der Einbringöffnung (138) abgewandte seitliche Flanke (150) dieses Federelements (120).

2. Dübelelement (104) nach Anspruch 1, **dadurch gekennzeichnet, dass** der Grundkörper (108)
a) zumindest näherungsweise hohlzylindrisch ausgebildet ist; und/oder
b) global zumindest näherungsweise eine konstante Materialstärke aufweist; und/oder
c) aus einem Metallblech (146) gebildet ist; und/oder
d) ein oder mehrere elastisch nachgiebige Federelemente (120) umfasst, welche durch einen oder mehrere Wandungsabschnitte (118) des Grundkörpers (108) gebildet sind, die in einem montierten Zustand des Dübelelements (104) spiralförmig in den Aufnahmeraum (112) hineinragen.

3. Dübelelement (104) nach einem der Ansprüche 1 oder 2, **dadurch gekennzeichnet, dass** ein oder mehrere Federelemente (120) des Grundkörpers (108)
a) in Richtung eines in den Aufnahmeraum (112) hineinragenden Endes (154) verjüngend ausgebildet sind; und/oder
b) Rastfedern (124) zur Verrastung des Befestigungselements (106) in dem Dübelelement (104) bilden.

4. Dübelelement (104) nach einem der Ansprüche 1 bis 3, **dadurch gekennzeichnet, dass**
a) der Grundkörper (108) eine Hülse (110) umfasst, welche eine Wandung (116) des Dübelelements (104) bildet, wobei das eine oder die mehreren Federelemente (120) des Grundkörpers (108) in einem montierten Zustand des Dübelelements (104) ausgehend von der Hülse (110) in den Aufnahmeraum (112) hineinragen; und/oder
b) einstückig ausgebildet ist.

5. Dübelelement (104) nach einem der Ansprüche 1 bis 4, **dadurch gekennzeichnet, dass** das Dübelelement (104) ein oder mehrere Verankerungselemente (128) zur Verankerung des Dübelelements (104) in einem Objekt (102) umfasst, wobei vorzugsweise
a) ein oder mehrere Verankerungselemente (128) durch Wandungsabschnitte (118) des Grundkörpers (108) gebildet sind, welche in einem montierten Zustand des Dübelelements (104) ausgehend von der Hülse (110) von dem Aufnahmeraum (112) nach außen weg ragen; und/oder
b) ein oder mehrere Verankerungselemente (128) in einem zur Montage des Dübelelements (104) bereiten Zustand ausgehend von der Hülse (110) zumindest abschnittsweise in den Aufnahmeraum (112) hinein ragen; und/oder
c) ein oder mehrere Verankerungselemente (128) Widerhaken (130) zur Verankerung des Dübelelements (104) in einem Objekt (102) bilden; und/oder
d) ein oder mehrere Verankerungselemente (128) ein Außengewinde (202) des Dübelelements (104) bilden.

6. Dübelelement (104) nach einem der Ansprüche 1 bis 5, **dadurch gekennzeichnet, dass** das Dübelelement (104) ein oder mehrere Arretierelemente (176) zur Arretierung eines oder mehrerer Federelemente (120) in einem vorgespannten Zustand umfasst, wobei vorzugsweise
a) ein oder mehrere Arretierelemente (176) durch Wandungsabschnitte (118) des Grundkörpers (108) gebildet sind; und/oder
b) ein oder mehrere Arretierelemente (176) in den Aufnahmeraum (112) hineinragen und/oder beim Einbringen eines Befestigungselements (106) in den Aufnahmeraum (112) betätigbar sind, insbesondere zum Freigeben eines oder mehrerer Federelemente (120).

7. Dübelelement (104) nach einem der Ansprüche 1 bis 6, **dadurch gekennzeichnet, dass** das Dübelelement (104) zwei oder mehr in einer Verbindungsrichtung (132) hintereinander angeordnete Federelemente (120) und/oder zwei oder mehr bezüglich einer Verbindungsrichtung (132) und/oder Umfangsrichtung (122) nebeneinander angeordnete Federelemente (120) umfasst.

8. Dübelelement (104) nach einem der Ansprüche 1 bis 7, **dadurch gekennzeichnet, dass** der Grundkörper (108) eine Einbringöffnung (138), durch welche ein Befestigungselement (106) in den Aufnahmeraum (112) einbringbar ist, und eine der Einbringöffnung (138) gegenüberliegend angeordnete Befestigungsöffnung (136) umfasst, wobei der Grundkörper (108) im Bereich der Befestigungsöffnung (136) einen nach innen ragenden Abschnitt (134) umfasst und/oder verjüngend ausgebildet ist.

9. Dübelelement (104) nach einem der Ansprüche 1 bis 8, **dadurch gekennzeichnet, dass** das Dübelelement (104) eine oder mehrere Flüssigkeitsaufnahmen (200) zur Aufnahme einer Flüssigkeit, insbesondere zur Aufnahme von Klebstoff, umfasst.

10. Befestigungsvorrichtung (100) zur Befestigung eines Objekts (102) an einem weiteren Objekt (102), umfassend:
- ein oder mehrere Dübelelemente (104) nach einem der Ansprüche 1 bis 9;
- ein oder mehrere Befestigungselemente (106) zum Einbringen und Festlegen in dem einen oder den mehreren Dübelelementen (104).

11. Befestigungsvorrichtung (100) nach Anspruch 10, **dadurch gekennzeichnet, dass** ein oder mehrere Befestigungselemente (106)
a) jeweils einen oder mehrere Befestigungsabschnitte (114) umfassen, mittels welchen das eine oder die mehreren Befestigungselemente (106) in einem oder mehreren Aufnahmeräumen (112) eines oder mehrerer Dübelelemente (104) festlegbar sind; und/oder
b) jeweils einen oder mehrere Verankerungsabschnitte (160) umfassen, mittels welchen das eine oder die mehreren Befestigungselemente (106) an oder in einem oder mehreren Objekten (102) festlegbar sind; und/oder
c) jeweils einen oder mehrere Anschlagabschnitte (166) umfassen, mittels welchen das eine oder die mehreren Befestigungselemente (106) in einer vorgegebenen Position an oder in einem oder mehreren Objekten (102) positionierbar sind; und/oder
d) jeweils einen oder mehrere Befestigungsabschnitte (114), jeweils einen oder mehrere Verankerungsabschnitte (160) und jeweils einen oder mehrere Verbindungsabschnitte (168) umfassen, wobei jeweils ein Verbindungsabschnitt (168) zwischen einem Verankerungsabschnitt (160) und einem Befestigungsabschnitt (114) eines Befestigungselements (106) angeordnet ist, wobei vorzugsweise der Verbindungsabschnitt (168) bezüglich einer Längsmittelachse (140) des Befestigungselements (106) in radialer Richtung eine geringere Ausdehnung aufweist als ein benachbarter Verankerungsabschnitt (160) und/oder als ein benachbarter Befestigungsabschnitt (114); und/oder
e) zumindest abschnittsweise einen zumindest näherungsweise T-förmigen Längsschnitt aufweisen.

12. Befestigungsvorrichtung (100) nach einem der Ansprüche 10 oder 11, **dadurch gekennzeichnet, dass**
a) ein einem Verankerungsabschnitt (160) eines Befestigungselements (106) abgewandtes Ende (174) eines Befestigungsabschnitts (114) des Befestigungselements (106) von dem Verankerungsabschnitt (160) weg gerichtet verjüngend ausgebildet ist; und/oder
b) ein einem Verankerungsabschnitt (160) eines Befestigungselements (106) zugewandtes Ende (172) eines Befestigungsabschnitts (114) des Befestigungselements (106) zu dem Verankerungsabschnitt (160) hin verjüngend ausgebildet ist; und/oder
c) ein einem Verankerungsabschnitt (160) eines Befestigungselements (106) abgewandtes Ende (174) eines Befestigungsabschnitts (114) des Befestigungselements (106) mit einer Werkzeugaufnahme (170) versehen ist; und/oder
d) zwei einander gegenüberliegende Enden eines Befestigungselements (106) mittels jeweils eines Dübelelements (104) an jeweils einem Objekt (102) verankerbar sind.

13. Verfahren zur Herstellung eines Dübelelements (104), insbesondere eines Dübelelements (104) nach einem der Ansprüche 1 bis 9, wobei das Verfahren Folgendes umfasst:
- Bereitstellen eines Blechmaterials (144), welches insbesondere als Flachbandmaterial (142) bereitgestellt und/oder zugeschnitten wird;
- Einbringen von Schnitten (148) und/oder Öffnungen in das Blechmaterial (144) zur Ausformung eines oder mehrerer Federelemente (120), wobei ein oder mehrere Federelemente (120) des Grundkörpers (108), welche durch einen oder mehrere Wandungsabschnitte (118) des Grundkörpers (108) gebildet sind, die in einem montierten Zustand des Dübelelements (104) in einen Aufnahmeraum (112) hineinragen, jeweils zwei seitliche Flanken (150) aufweisen, wobei die Flanken (150) mit einer Verbindungsrichtung (132) des Dübelelements (104) voneinander verschiedene Winkel (α (alpha), β (beta)) einschließen und wobei eine einer Einbringöffnung (138) des Grundkörpers (108) zugewandte seitliche Flanke (150) eines jeden Federelements (120) mit der Verbindungsrichtung (132) einen kleineren Winkel einschließt als eine der Einbringöffnung (138) abgewandte seitliche Flanke (150) dieses Federelements (120);
- Umformen des Blechmaterials (144) zur Herstellung einer Hülse (110) des Dübelelements (104) und zur Formgebung und/oder zur Vorspannung des einen oder der mehreren Federelemente (120).

14. Verfahren nach Anspruch 13, **dadurch gekennzeichnet, dass** zur Ausformung eines oder mehrerer Verankerungselemente (128) Schnitte (148) und/oder Öffnungen in das Blechmaterial (144) eingebracht werden.

15. Verfahren zur Montage einer Befestigungsvorrichtung (100), umfassend:
- Bereitstellen einer Befestigungsvorrichtung (100) nach einem der Ansprüche : 10 bis 12;
- Einbringen des Dübelelements (104) in eine Öffnung in einem Objekt (102) und Verankern des Dübelelements (104) in der Öffnung;
- Festlegen eines Endes des Befestigungselements (106) an oder in einem weiteren Objekt (102);
- Einbringen eines weiteren Endes des Befestigungselements (106) in den Aufnahmeraum (112) des Dübelelements (104) zur Herstellung einer Verbindung zwischen den beiden Objekten (102).

## Claims

1. Anchor element (104) for fastening an article (102) to a further article (102), wherein the anchor element (104) includes a base body (108) that takes a hollow form, at least in certain regions, and surrounds a receiving space (112) for receiving a fastening element (106), wherein the base body (108) includes an insertion opening (138) for inserting the fastening element (106) into the receiving space (112) wherein the base body (108) includes one or more elastically yielding spring elements (120) that are formed by one or more wall portions (118) of the base body (108), and these project into the receiving space (112) in an installed condition of the anchor element (104),
**characterized in that** one or more spring elements (120) of the base body (102) each have two lateral flanks (150), wherein the flanks (150) form mutually different angles (a (alpha), β (beta)) with a direction of connection (132) of the anchor element (104) and wherein a lateral flank (150) of a respective spring element (120) that faces the insertion opening (138) forms a smaller angle with the direction of connection (132) than a lateral flank (150) of this spring element (120) that is remote from the insertion opening (138).

2. Anchor element (104) according to Claim 1, **characterised in that** the base body (108)
a) takes an at least approximately hollow-cylindrical form; and/or
b) has a constant material thickness at least approximately throughout; and/or
c) is made from a metal sheet (146); and/or
d) includes one or more elastically yielding spring elements (120), which are formed by one or more wall portions (118) of the base body (108) that project into the receiving space (112) in a spiral shape in an installed condition of the anchor element (104).

3. Anchor element (104) according to either of Claims 1 or 2, **characterised in that** one or more spring elements (120) of the base body (108)
a) are formed such that they taper in the direction of an end (154) projecting into the receiving space (112); and/or
b) form latching springs (124) for latching the fastening element (106) in the anchor element (104).

4. Anchor element (104) according to any one of Claims 1 to 3, **characterised in that**
a) the base body (108) includes a sleeve (110) that forms a wall (116) of the anchor element (104), wherein, in an installed condition of the anchor element (104), the one or more spring elements (120) of the base body (108) project from the sleeve (110) into the receiving space (112); and/or
b) is formed in one piece.

5. Anchor element (104) according to any one of Claims 1 to 4, **characterised in that** the anchor element (104) includes one or more anchoring elements (128) for anchoring the anchor element (104) in an article (102), wherein preferably
a) one or more anchoring elements (128) are formed by wall portions (118) of the base body (108) which, in an installed condition of the anchor element (104), starting from the sleeve (110), project outwards away from the receiving space (112); and/or
b) in a condition that is ready for installation of the anchor element (104), one or more anchoring elements (128), starting from the sleeve (110), project at least in certain regions into the receiving space (112); and/or
c) one or more anchoring elements (128) form barbs (130) for anchoring the anchor element (104) in an article (102); and/or
d) one or more anchoring elements (128) form an external thread (202) of the anchor element (104).

6. Anchor element (104) according to any one of Claims 1 to 5, **characterised in that** the anchor element (104) includes one or more locking elements (176) for locking one or more spring elements (120) in a pre-stressed condition, wherein preferably
a) one or more locking elements (176) are formed by wall portions (118) of the base body (108); and/or
b) one or more locking elements (176) project into the receiving space (112) and/or, when a fastening element (106) is inserted into the receiving space (112), are actuable, in particular for the purpose of releasing one or more spring elements (120).

7. Anchor element (104) according to any one of Claims 1 to 6, **characterised in that** the anchor element (104) includes two or more spring elements (120) that are arranged one behind the other in a direction of connection (132) and/or two or more spring elements (120) that are arranged next to one another in relation to a direction of connection (132) and/or peripheral direction (122).

8. Anchor element (104) according to any one of Claims 1 to 7, **characterised in that** the base body (108) includes an insertion opening (138), through which a fastening element (106) is insertable into the receiving space (112), and a fastening opening (136) arranged opposite the insertion opening (138), wherein, in the region of the fastening opening (136), the base body (108) includes an inwardly projecting portion (134) and/or takes a tapering form.

9. Anchor element (104) according to any one of Claims 1 to 8, **characterised in that** the anchor element (104) includes one or more fluid receptacles (200) for receiving a fluid, in particular for receiving adhesive.

10. Fastening device (100) for fastening an article (102) to a further article (102), including:
- one or more anchor elements (104) according to any one of Claims 1 to 9;
- one or more fastening elements (106) for inserting and fixing in the one or more anchor elements (104).

11. Fastening device (100) according to Claim 10, **characterised in that** one or more fastening elements (106)
a) each include one or more fastening portions (114) by means of which the one or more fastening elements (106) are fixable in one or more receiving spaces (112) of one or more anchor elements (104); and/or
b) each include one or more anchoring portions (160) by means of which the one or more fastening elements (106) are fixable on or in one or more articles (102), and/or
c) each include one or more abutment portions (166) by means of which the one or more fastening elements (106) are positionable in a predetermined position on or in one or more articles (102); and/or
d) include in each case one or more fastening portions (114), in each case one or more anchoring portions (160) and in each case one or more connection portions (168), wherein in each case a connection portion (168) is arranged between an anchoring portion (160) and a fastening portion (114) of a fastening element (106), wherein preferably in relation to a longitudinal centre axis (140) of the fastening element (106), the connection portion (168) has a smaller extent in the radial direction than an adjacent anchoring portion (160) and/or an adjacent fastening portion (114); and/or
e) have, at least in certain regions, an at least approximately T-shaped longitudinal section.

12. Fastening device (100) according to either of Claims 10 or 11, **characterised in that**
a) an end (174) of a fastening portion (114) of a fastening element (106) that is remote from an anchoring portion (160) of the fastening element (106) is formed to taper in the direction away from the anchoring portion (160); and/or
b) an end (172) of a fastening portion (114) of a fastening element (106) that faces an anchoring portion (160) of the fastening element (106) is formed to taper towards the anchoring portion (160); and/or
c) an end (174) of a fastening portion (114) of a fastening element (106) that is remote from an anchoring portion (160) of the fastening element (106) is provided with a tool receptacle (170); and/or
d) two mutually opposite ends of a fastening element (106) are anchorable to a respective article (102) by means of a respective anchor element (104).

13. Method for producing an anchor element (104), in particular an anchor element (104) according to any one of Claims 1 to 9, wherein the method includes the following:
- providing a sheet-metal material (144), which in particular is prepared as a flat strip material (142) and/or cut to size;
- making cuts (148) and/or openings in the sheet-metal material (144), in order to form one or more spring elements (120), wherein one or more spring elements (120) of the base body (108) that are formed by one or more wall portions (118) of the base body (108), and these project into a receiving space (112) in an installed condition of the anchor element (104), each have two lateral flanks (150), wherein the flanks (150) form mutually different angles (a (alpha), β (beta)) with a direction of connection (132) of the anchor element (104) and wherein a lateral flank (150) of a respective spring element (120) that faces an insertion opening (138) of the base body (108) forms a smaller angle with the direction of connection (132) than a lateral flank (150) of this spring element (120) that is remote from the insertion opening (138);
- shaping the sheet-metal material (144) in order to produce a sleeve (110) of the anchor element (104) and/or to shape and/or to put into a pre-stressed position the one or more spring elements (120).

14. Method according to Claim 13, **characterised in that**, for the purpose of forming one or more anchoring elements (128), cuts (148) and/or openings are made in the sheet-metal material (144).

15. Method for installing a fastening device (100), including:
- providing a fastening device (100) according to any one of Claims 10 to 12;
- inserting the anchor element (104) into an opening in an article (102), and anchoring the anchor element (104) in the opening;
- fixing one end of the fastening element (106) to or in a further article (102);
- inserting a further end of the fastening element (106) into the receiving space (112) of the anchor element (104), in order to produce a connection between the two articles (102).

## Revendications

1. Élément cheville (104) pour la fixation d'un objet (102) à un autre objet (102), dans lequel l'élément cheville (104) comporte un corps de base (108) réalisé au moins par sections de manière creuse qui entoure un espace de réception (112) pour la réception d'un élément de fixation (106), dans lequel le corps de base (108) comporte une ouverture d'introduction (138) pour l'introduction de l'élément de fixation (106) dans l'espace de réception (112), dans lequel le corps de base (108) comporte un ou plusieurs éléments de ressort (120) flexibles élastiquement qui sont formés par une ou plusieurs sections de paroi (118) du corps de base (108) qui pénètrent dans un état monté de l'élément cheville (104) dans l'espace de réception (112),
**caractérisé en ce qu'**un ou plusieurs éléments cheville (120) du corps de base (108) présentent respectivement deux flancs latéraux (150), dans lequel les flancs (150) forment avec un sens de liaison (132) de l'élément cheville (104) des angles différents l'un de l'autre (a (alpha), β (bêta)) et dans lequel un flanc (150) latéral tourné vers l'ouverture d'introduction (138) de chaque élément de ressort (120) forme avec le sens de liaison (132) un angle plus petit qu'un flanc (150) latéral éloigné de l'ouverture d'introduction (138) de cet élément de ressort (120).

2. Élément cheville (104) selon la revendication 1, **caractérisé en ce que** le corps de base (108)
a) est réalisé au moins approximativement de manière cylindrique et creuse ; et/ou
b) présente globalement au moins approximativement une épaisseur de matériau constante ; et/ou
c) est formé d'une tôle métallique (146) ; et/ou
d) comporte un ou plusieurs éléments de ressort (120) flexibles élastiquement qui sont formés par une ou plusieurs sections de paroi (118) du corps de base (108) qui pénètrent dans un état monté de l'élément cheville (104) en forme de spirale dans l'espace de réception (112).

3. Élément cheville (104) selon l'une des revendications 1 ou 2, **caractérisé en ce qu'**un ou plusieurs éléments de ressort (120) du corps de base (108)
a) sont réalisés se rétrécissant en direction d'une extrémité (154) pénétrant dans l'espace de réception (112) ; et/ou
b) forment des ressorts d'encliquetage (124) pour l'encliquetage de l'élément de fixation (106) dans l'élément cheville (104).

4. Élément cheville (104) selon l'une des revendications 1 à 3, **caractérisé en ce que**
a) le corps de base (108) comporte une douille (110) qui forme une paroi (116) de l'élément cheville (104), dans lequel l'un ou les plusieurs éléments de ressort (120) du corps de base (108) pénètrent dans un état monté de l'élément cheville (104) à partir de la douille (110) dans l'espace de réception (112) ; et/ou
b) est réalisé d'un seul tenant.

5. Élément cheville (104) selon l'une des revendications 1 à 4, **caractérisé en ce que** l'élément cheville (104) comporte un ou plusieurs éléments d'ancrage (128) pour l'ancrage de l'élément cheville (104) dans un objet (102), dans lequel de préférence
a) un ou plusieurs éléments d'ancrage (128) sont formés par des sections de paroi (118) du corps de base (108) qui dépassent dans un état monté de l'élément cheville (104) à partir de la douille (110) loin de l'espace de réception (112) vers l'extérieur ; et/ou
b) un ou plusieurs éléments d'ancrage (128) pénètrent dans un état prêt au montage de l'élément cheville (104) à partir de la douille (110) au moins par sections dans l'espace de réception (112) ; et/ou
c) un ou plusieurs éléments d'ancrage (128) forment des barbillons (130) pour l'ancrage de l'élément cheville (104) dans un objet (102) ; et/ou
d) un ou plusieurs éléments d'ancrage (128) forment un filet extérieur (202) de l'élément cheville (104).

6. Élément cheville (104) selon l'une des revendications 1 à 5, **caractérisé en ce que** l'élément cheville (104) comporte un ou plusieurs éléments d'arrêt (176) pour l'arrêt d'un ou de plusieurs éléments de ressort (120) dans un état précontraint, dans lequel de préférence
a) un ou plusieurs éléments d'arrêt (176) sont formés par des sections de paroi (118) du corps de base (108) ; et/ou
b) un ou plusieurs éléments d'arrêt (176) pénètrent dans l'espace de réception (112) et/ou sont actionnables lors de l'introduction d'un élément de fixation (106) dans l'espace de réception (112), en particulier pour la libération d'un ou de plusieurs éléments de ressort (120).

7. Élément cheville (104) selon l'une des revendications 1 à 6, **caractérisé en ce que** l'élément cheville (104) comporte deux éléments de ressort (120) ou plus agencés l'un derrière l'autre dans un sens de liaison (132) et/ou deux éléments de ressort (120) ou plus agencés l'un à côté de l'autre par rapport à un sens de liaison (132) et/ou un sens périphérique (122).

8. Élément cheville (104) selon l'une des revendications 1 à 7, **caractérisé en ce que** le corps de base (108) comporte une ouverture d'introduction (138), par laquelle un élément de fixation (106) peut être introduit dans l'espace de réception (112), et une ouverture de fixation (136) agencée à l'opposé de l'ouverture d'introduction (138), dans lequel le corps de base (108) comporte dans la zone de l'ouverture de fixation (136) une section (134) dépassant vers l'intérieur et/ou est réalisée se rétrécissant.

9. Élément cheville (104) selon l'une des revendications 1 à 8, **caractérisé en ce que** l'élément cheville (104) comporte un ou plusieurs logements de liquide (200) pour la réception d'un liquide, en particulier pour la réception de colle.

10. Dispositif de fixation (100) pour la fixation d'un objet (102) à un autre objet (102) comprenant :
- un ou plusieurs éléments cheville (104) selon l'une des revendications 1 à 9 ;
- un ou plusieurs éléments de fixation (106) pour l'introduction et la fixation dans l'un ou les plusieurs éléments cheville (104).

11. Dispositif de fixation (100) selon la revendication 10, **caractérisé en ce qu'**un ou plusieurs éléments de fixation (106)
a) comportent respectivement une ou plusieurs sections de fixation (114), au moyen desquelles l'un ou les plusieurs éléments de fixation (106) peuvent être fixés dans un ou plusieurs espaces de réception (112) d'un ou de plusieurs éléments cheville (104) ; et/ou
b) comportent respectivement une ou plusieurs sections d'ancrage (160), au moyen desquelles l'un ou les plusieurs éléments de fixation (106) peuvent être fixés à ou dans un ou plusieurs objets (102) ; et/ou
c) comportent respectivement une ou plusieurs sections de butée (166), au moyen desquelles l'un ou les plusieurs éléments de fixation (106) peuvent être positionnés dans une position prescrite sur ou dans un ou plusieurs objets (102) ; et/ou
d) comportent respectivement une ou plusieurs sections de fixation (114), respectivement une ou plusieurs sections d'ancrage (160) et respectivement une ou plusieurs sections de liaison (168), dans lequel respectivement une section de liaison (168) est agencée entre une section d'ancrage (160) et une section de fixation (114) d'un élément de fixation (106), dans lequel de préférence la section de liaison (168) présente par rapport à un axe médian longitudinal (140) de l'élément de fixation (106) dans le sens radial une extension plus faible qu'une section d'ancrage (160) contiguë et/ou comme section de fixation (114) contiguë ; et/ou
e) présentent au moins par sections une coupe longitudinale au moins approximativement en forme de T.

12. Dispositif de fixation (100) selon l'une des revendications 10 ou 11, **caractérisé en ce que**
a) une extrémité (174) éloignée d'une section d'ancrage (160) d'un élément de fixation (106) d'une section de fixation (114) de l'élément de fixation (106) est réalisée se rétrécissant loin de la section d'ancrage (160) ; et/ou
b) une extrémité (172) tournée vers une section d'ancrage (160) d'un élément de fixation (106) d'une section de fixation (114) de l'élément de fixation (106) est réalisée se rétrécissant vers la section d'ancrage (160) ; et/ou
c) une extrémité (174) éloignée d'une section d'ancrage (160) d'un élément de fixation (106) d'une section de fixation (114) de l'élément de fixation (106) est pourvue d'un logement d'outil (170) ; et/ou
d) deux extrémités opposées d'un élément de fixation (106) peuvent être ancrées respectivement au moyen d'un élément cheville (104) respectivement à un objet (102).

13. Procédé de fabrication d'un élément cheville (104), en particulier d'un élément cheville (104) selon l'une des revendications 1 à 9, dans lequel le procédé comporte ce qui suit :
- la fourniture d'un matériau de tôle (144) qui est fourni et/ou coupé en particulier comme matériau de bande plat (142) ;
- l'introduction de coupes (148) et/ou d'ouvertures dans le matériau de tôle (144) pour le façonnage d'un ou de plusieurs éléments de ressort (120), dans lequel un ou plusieurs éléments de ressort (120) du corps de base (108) qui sont formés par une ou plusieurs sections de paroi (118) du corps de base (108), qui pénètrent dans un état monté de l'élément cheville (104) dans un espace de réception (112), présentent respectivement deux flancs (150) latéraux, dans lequel les flancs (150) forment avec un sens de liaison (132) de l'élément cheville (104) des angles différents l'un de l'autre (a (alpha), β (bêta)) et dans lequel un flanc (150) latéral tourné vers une ouverture d'introduction (138) du corps de base (108) de chaque élément de ressort (120) forme avec le sens de liaison (132) un plus petit angle qu'un flanc (150) latéral éloigné de l'ouverture d'introduction (138) de cet élément de ressort (120) ;
- la mise en forme du matériau de tôle (144) pour la fabrication d'une douille (110) de l'élément cheville (104) et pour le formage et/ou pour la précontrainte d'un ou des plusieurs éléments de ressort (120).

14. Procédé selon la revendication 13, **caractérisé en ce que** pour le façonnage d'un ou de plusieurs éléments d'ancrage (128) des coupes (148) et/ou des ouvertures sont ménagées dans le matériau de tôle (144).

15. Procédé de montage d'un dispositif de fixation (100), comprenant :
- la fourniture d'un dispositif de fixation (100) selon l'une des revendications 10 à 12 ;
- l'introduction de l'élément cheville (104) dans une ouverture dans un objet (102) et l'ancrage de l'élément cheville (104) dans l'ouverture ;
- la fixation d'une extrémité de l'élément de fixation (106) à ou dans un autre objet (102) ;
- l'introduction d'une autre extrémité de l'élément de fixation (106) dans l'espace de réception (112) de l'élément cheville (104) pour l'établissement d'une liaison entre les deux objets (102).
